(19) Europäisches Patentamt

European Patent Office

Office européen des brevets

(11) EP 4 622 172 A1

(12) **EUROPEAN PATENT APPLICATION**
published in accordance with Art. 153(4) EPC

(43) Date of publication:
**24.09.2025 Bulletin 2025/39**

(21) Application number: **23899919.7**

(22) Date of filing: **04.12.2023**

(51) International Patent Classification (IPC):
**H04L 9/40** (2022.01)    **H04L 43/08** (2022.01)

(52) Cooperative Patent Classification (CPC):
**H04L 9/40; H04L 43/08**

(86) International application number:
**PCT/CN2023/136161**

(87) International publication number:
**WO 2024/120341 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.12.2022 CN 202211575192**

(71) Applicant: **Huawei Technologies Co., Ltd.
Shenzhen, Guangdong 518129 (CN)**

(72) Inventors:
• **MA, Tianjun
Shenzhen, Guangdong 518129 (CN)**

• **JIANG, Weiyu
Shenzhen, Guangdong 518129 (CN)**
• **LI, Jieyu
Shenzhen, Guangdong 518129 (CN)**
• **CHENG, Jianming
Shenzhen, Guangdong 518129 (CN)**
• **YANG, Yan
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DERIVED VERIFICATION METHOD, SYSTEM, VERIFICATION POINT, CONVERSION POINT, TERMINAL AND STORAGE MEDIUM**

(57) Embodiments of this application disclose an in-path verification method and system, a verification point, a translation point, a terminal, and a storage medium, and relate to the field of communication technologies. In the method, the verification point receives a first packet from a terminal, where the first packet includes an unencrypted first in-path verification header, and the first in-path verification header carries a first profile index; the verification point determines a second profile index based on the first profile index, where the second profile index is a real index of a profile used in the first in-path verification header; and the verification point verifies the first packet based on a profile indicated by the second profile index. In other words, a profile index transmitted in a network is an obfuscated profile index. In this way, even if an attacker obtains the obfuscated profile index, a relative position of each field in an in-path verification header cannot be obtained based on the obfuscated profile index. Therefore, network security of a packet can be improved. In addition, in this manner, there is no need to separately encrypt the in-path verification header. Therefore, packet transmission pressure of the network can also be reduced.

A verification point receives a first packet from a terminal, where the first packet includes an unencrypted first in-path verification header, and the first in-path verification header carries a first profile index — 801

The verification point determines a second profile index based on the first profile index, where the second profile index is a real index of a profile used in the first in-path verification header — 802

The verification point verifies the first packet based on a profile indicated by the second profile index — 803

FIG. 8

EP 4 622 172 A1

## Description

This application claims priority to Chinese Patent Application No. 202211575192.X, filed on December 8, 2022 and entitled "IN-PATH VERIFICATION METHOD AND SYSTEM, VERIFICATION POINT, TRANSLATION POINT, TERMINAL, AND STORAGE MEDIUM", which is incorporated herein by reference in its entirety.

## TECHNICAL FIELD

Embodiments of this application relate to the field of communication technologies, and in particular, to an in-path verification method and system, a verification point, a translation point, a terminal, and a storage medium.

## BACKGROUND

In-path verification is a technology in which a packet is verified using information carried in the packet, such as a source identifier, to provide security protection for the packet. In comparison with providing security protection for a packet through internet protocol security (Internet Protocol Security, IPsec), in-path verification can reduce storage overheads of a verification point and is applicable to a scenario in which there are a large quantity of terminals in a network.

In a related technology, a terminal includes an in-path verification header in a to-be-sent packet, and to prevent the in-path verification header from being exposed to the network and being maliciously used by an attacker, the terminal further encrypts the in-path verification header. When receiving the packet, a verification point decrypts the in-path verification header to obtain a profile index carried in the decrypted in-path verification header. The profile index indicates a profile used in the in-path verification header, and the profile is used to describe information such as a position, a meaning, and a length of each field in the in-path verification header. The verification point determines a value of each field in the in-path verification header based on the profile indicated by the profile index, and then verifies the packet based on the value of each field in the in-path verification header.

In the related technology, when the in-path verification header is encrypted, a header needs to be added to the packet to carry additional information such as an encryption parameter. This increases packet transmission pressure of the network.

## SUMMARY

Embodiments of this application provide an in-path verification method and system, a verification point, a translation point, a terminal, and a storage medium, to reduce packet transmission pressure of a network while ensuring network security of an in-path verification header. The technical solutions are as follows.

According to a first aspect, an in-path verification method is provided. In the method, a verification point receives a first packet from a terminal, where the first packet includes an unencrypted first in-path verification header, and the first in-path verification header carries a first profile index; the verification point determines a second profile index based on the first profile index, where the second profile index is a real index of a profile used in the first in-path verification header; and the verification point verifies the first packet based on a profile indicated by the second profile index.

In this embodiment of this application, when sending a packet, the terminal may not separately encrypt an in-path verification header, but perform obfuscation processing on a profile index carried in the in-path verification header, so that a profile index transmitted in a network is an obfuscated profile index. In this way, even if an attacker obtains the obfuscated profile index, a relative position of each field in the in-path verification header cannot be obtained based on the obfuscated profile index. Therefore, network security of the packet can be improved. In addition, in this manner, there is no need to separately encrypt the in-path verification header. Therefore, packet transmission pressure of the network can also be reduced.

Based on the method provided in the first aspect, in some possible implementations, the first in-path verification header further carries a master key identifier and a key derivation parameter. In this scenario, an implementation in which the verification point determines the second profile index based on the first profile index may be: determining a first derived key based on the master key identifier and the key derivation parameter; and performing first obfuscation processing on the first derived key and the first profile index to obtain the second profile index.

The master key identifier and the key derivation parameter are carried in the packet, so that the verification point temporarily generates information required for restoring a real profile index. This can reduce storage overheads of the verification point, and increase difficulty in cracking the real profile index by the attacker.

Based on the method provided in the first aspect, in some possible implementations, the first in-path verification header further carries a first key truncation bit quantity. In this scenario, an implementation of performing the first obfuscation processing on the first derived key and the first profile index to obtain the second profile index may be: obtaining a plurality of first bits through truncation from the first derived key based on the first key truncation bit quantity; and

performing an exclusive OR operation on the plurality of first bits and the first profile index to obtain the second profile index.

In the foregoing manner, the real profile index can be obfuscated, and the first key truncation bit quantity is carried in the packet, so that the verification point can perform an exclusive OR operation on different bit sequences based on information carried in the packet, to obfuscate the real profile index, and the storage overheads of the verification point can also be reduced.

Based on the method provided in the first aspect, in some possible implementations, the verification point stores a plurality of profiles and profile indexes that are in one-to-one correspondence with the plurality of profiles. Each profile in the plurality of profiles is used to at least define a position of each field in a corresponding in-path verification header, and at least one same field in different profiles has different positions. In this scenario, an implementation in which the verification point verifies the first packet based on the profile indicated by the second profile index may be: obtaining, from the plurality of profiles, the profile indicated by the second profile index; obtaining a value of at least one field in the first in-path verification header based on the profile indicated by the second profile index; and verifying the first packet based on the value of the at least one field in the first in-path verification header.

To further improve difficulty in cracking the real profile index by the attacker, an authentication server may deliver a plurality of profiles and profile indexes respectively corresponding to the plurality of profiles to the verification point in advance. Each profile in the plurality of profiles is used to at least define a position of each field in a corresponding in-path verification header, and at least one same field in different profiles has different positions. In other words, in this embodiment of this application, ranks of same fields defined in different profiles may be different. In this way, the attacker cannot analyze a traffic feature based on an order of fields in the in-path verification header.

Based on the method provided in the first aspect, in some possible implementations, after the verification point verifies the first packet based on the profile indicated by the second profile index, the method includes: After determining that the verification on the first packet succeeds, the verification point processes the first packet to obtain a second packet, where the second packet includes an updated first in-path verification header, and the updated first in-path verification header carries the second profile index; and the verification point sends the second packet to a server.

Because a network between the verification point and the server is usually secure, the updated real profile index may be in the second packet, to improve efficiency of subsequent packet processing.

Based on the method provided in the first aspect, in some possible implementations, in the method, the verification point receives a first response packet from the server, where the first response packet includes a second in-path verification header, and the second in-path verification header carries the second profile index; the verification point encrypts the first response packet based on the profile indicated by the second profile index, and obfuscates the second profile index in the second in-path verification header as a third profile index, to obtain a second response packet, where the second response packet includes an updated second in-path verification header; and the verification point sends the second response packet to the terminal.

In this embodiment of this application, to avoid a need of reassembling an in-path verification header by the verification point for a packet sent by the server, the server may directly include the second in-path verification header in the first response packet. In this way, after receiving the first response packet, the verification point only needs to update values of some fields in the second in-path verification header in the first response packet, and does not need to reassemble the first response packet. Therefore, processing overheads of the verification point can be reduced, thereby improving performance of the verification point.

Based on the method provided in the first aspect, in some possible implementations, the second in-path verification header further carries the master key identifier and the key derivation parameter that are in the first in-path verification header. In this scenario, an implementation in which the verification point obfuscates the second profile index in the second in-path verification header as the third profile index may be: determining a first derived key based on the master key identifier and the key derivation parameter; and performing second obfuscation processing on the first derived key and the second profile index to obtain the third profile index.

Because the server does not have an in-path verification function, the server directly uses an in-path verification header in the received second packet as the second in-path verification header, and fields in the in-path verification header in the second packet are the same as those in the first in-path verification header except a profile index. Therefore, the verification point may perform obfuscation processing based on information carried in the second in-path verification header, so that the verification point does not need to pre-store related information, and storage overheads of the verification point are reduced.

Based on the method provided in the first aspect, in some possible implementations, an implementation of performing the second obfuscation processing on the first derived key and the second profile index to obtain the third profile index may be: obtaining a second key truncation bit quantity; obtaining a plurality of second bits through truncation from the first derived key based on the second key truncation bit quantity; and performing an exclusive OR operation on the plurality of second bits and the second profile index to obtain the third profile index, where the updated second in-path verification header further carries the second key truncation bit quantity.

In the foregoing manner, the real profile index can be obfuscated, and the second key truncation bit quantity is carried in the packet, so that the terminal subsequently restores the real profile index.

According to a second aspect, an in-path verification method is provided. In the method, a translation point receives a third packet from a terminal, where the third packet includes a third in-path verification header, and the third in-path verification header is a simplified mode in-path verification header; the translation point reassembles the third in-path verification header into a fully flexible mode in-path verification header, and obfuscates a profile index carried in the fully flexible mode in-path verification header obtained through reassembly, to obtain a first packet including a first in-path verification header, where the fully flexible mode in-path verification header carries more information than the simplified mode in-path verification header; and the translation point sends the first packet to a verification point.

To reduce overheads of a resource-limited terminal, the fully flexible mode in-path verification header carries more information than the simplified mode in-path verification header. In this way, when generating the third packet, the resource-limited terminal may generate a relatively simple simplified mode in-path verification header instead of a relatively complex fully flexible mode in-path verification header, so that the method provided in this embodiment of this application is more applicable to a scenario in which there are a large quantity of terminals.

Based on the method provided in the second aspect, in some possible implementations, the third in-path verification header carries a fourth profile index. In this scenario, an implementation in which the translation point reassembles the third in-path verification header into the fully flexible mode in-path verification header may be: obtaining a second profile index corresponding to the fourth profile index; and reassembling the third in-path verification header into the fully flexible mode in-path verification header based on a profile indicated by the second profile index and a profile indicated by the fourth profile index.

A fully flexible mode profile corresponding to a simplified mode profile is determined. Because a value of each field is defined in the profile, the translation point can translate the simplified mode in-path verification header into the fully flexible mode in-path verification header based on the simplified mode profile and the fully flexible mode profile.

Based on the method provided in the second aspect, in some possible implementations, the third packet further includes an internet protocol IP header, the IP header carries a source medium access control MAC address, the translation point stores a profile mapping relationship, and the profile mapping relationship includes a plurality of MAC addresses and simplified mode profile indexes and fully flexible mode profile indexes that are respectively corresponding to the plurality of MAC addresses. In this scenario, an implementation of obtaining the second profile index corresponding to the fourth profile index may be: obtaining, from the profile mapping relationship, a fully flexible mode profile index corresponding to both the source MAC address and the fourth profile index, to obtain the second profile index.

In this embodiment of this application, simplified mode profile indexes and fully flexible mode profile indexes that are respectively corresponding to different MAC addresses may be configured in advance on the translation point, so that the translation point quickly finds, when receiving a packet, a simplified mode profile index and a fully flexible mode profile index that are corresponding to a current MAC address.

Based on the method provided in the second aspect, in some possible implementations, the translation point stores a first derived key, a master key identifier, and a key derivation parameter, and the first derived key is generated based on the master key identifier and the key derivation parameter. In this scenario, an implementation of obfuscating of the profile index carried in the fully flexible mode in-path verification header obtained through reassembly may be: performing first obfuscation processing on the profile index carried in the fully flexible mode in-path verification header obtained through reassembly and the first derived key, where the first in-path verification header further carries the master key identifier and the key derivation parameter.

In the foregoing manner, the translation point can obfuscate a real profile index, and a related parameter is carried in an in-path manner, to reduce storage overheads of the verification point.

Based on the method provided in the second aspect, in some possible implementations, a value of a reference bit of a profile index carried in the third in-path verification header is a first bit value, to indicate that the third in-path verification header is the simplified mode in-path verification header.

The reference bit is designed, so that the translation point can quickly recognize the simplified mode in-path verification header.

Based on the method provided in the second aspect, in some possible implementations, in the method, the translation point receives a second response packet sent by the verification point, where the second response packet includes a fourth in-path verification header, and the fourth in-path verification header is a fully flexible mode in-path verification header; the verification point restores a profile index carried in the fourth in-path verification header, and reassembles the fourth in-path verification header into a fifth in-path verification header based on the restored profile index, to obtain a third response packet, where the fifth in-path verification header is a simplified mode in-path verification header; and the translation point sends the third response packet to the terminal.

Because a current terminal is the resource-limited terminal, to reduce overheads of the terminal, the translation point may reassemble the fourth in-path verification header into the fifth in-path verification header based on the restored profile index, to translate the fully flexible mode in-path verification header into the simplified mode in-path verification header.

Based on the method provided in the second aspect, in some possible implementations, a value of a reference bit of the profile index carried in the fourth in-path verification header is a second bit value, to indicate that the fourth in-path verification header is the fully flexible mode in-path verification header.

The reference bit is designed, so that the translation point can quickly recognize the fully flexible mode in-path verification header.

According to a third aspect, an in-path verification method is provided. In the method, a terminal generates an in-path verification header based on a profile indicated by a second profile index, and obfuscates the second profile index in the generated in-path verification header as a first profile index, to obtain a first in-path verification header; and the terminal sends a first packet to a verification point, where the first packet includes the unencrypted first in-path verification header, and the first in-path verification header carries the first profile index.

Based on the method provided in the third aspect, in some possible implementations, the terminal stores a first derived key, a master key identifier, and a key derivation parameter, and the first derived key is generated based on the master key identifier and the key derivation parameter. In this scenario, an implementation of obfuscating the second profile index in the generated in-path verification header as the first profile index may be: performing first obfuscation processing on the first derived key and the second profile index to obtain the first profile index, where the first in-path verification header further carries the master key identifier and the key derivation parameter.

Based on the method provided in the third aspect, in some possible implementations, an implementation of performing the first obfuscation processing on the first derived key and the second profile index to obtain the first profile index may be: obtaining a first key truncation bit quantity; obtaining a plurality of first bits through truncation from the first derived key based on the first key truncation bit quantity; and performing an exclusive OR operation on the plurality of first bits and the first profile index to obtain the second profile index, where the first in-path verification header further carries the first key truncation bit quantity.

Based on the method provided in the third aspect, in some possible implementations, after the terminal sends the first packet to the verification point, the terminal may further receive a second response packet sent by the verification point, where the second response packet includes an unencrypted fourth in-path verification header, and the fourth in-path verification header carries a third profile index; the terminal determines a second profile index based on the third profile index, where the second profile index is a real index of a profile used in the fourth in-path verification header; and the terminal verifies the second response packet based on a profile indicated by the second profile index.

Based on the method provided in the third aspect, in some possible implementations, the terminal stores the first derived key; and an implementation in which the terminal determines the second profile index based on the third profile index may be: performing second obfuscation processing on the first derived key and the third profile index to obtain the second profile index.

Based on the method provided in the third aspect, in some possible implementations, the second in-path verification header further carries a second key truncation bit quantity. In this scenario, an implementation of performing the second obfuscation processing on the first derived key and the third profile index may be: obtaining a plurality of second bits through truncation from the first derived key based on the second key truncation bit quantity; and performing an exclusive OR operation on the plurality of second bits and the third profile index to obtain the second profile index.

For a technical effect of the in-path verification method provided in the third aspect, refer to the technical effect of the in-path verification method provided in the first aspect. Details are not described herein again.

According to a fourth aspect, an in-path verification method is provided. In the method, a terminal sends a third packet to a translation point, where the third packet includes a third in-path verification header, and the third in-path verification header is a simplified mode in-path verification header.

A profile index carried in the third in-path verification header is a real index of a profile used in the third in-path verification header.

Based on the method provided in the fourth aspect, in some possible implementations, the terminal further receives a third response packet sent by the translation point, where the third response packet includes a fifth in-path verification header, and the fifth in-path verification header is a simplified mode in-path verification header.

A profile index carried in the fifth in-path verification header is a real index of a profile used in the fifth in-path verification header.

For a technical effect of the in-path verification method provided in the third aspect, refer to the technical effect of the in-path verification method provided in the second aspect. Details are not described herein again.

According to a fifth aspect, a verification point is provided, and the verification point has a function of implementing a behavior of the in-path verification method in the first aspect. The verification point includes at least one module, and the at least one module is configured to implement the in-path verification method provided in the first aspect.

According to a sixth aspect, a translation point is provided, and the translation point has a function of implementing a behavior of the in-path verification method in the second aspect. The translation point includes at least one module, and the at least one module is configured to implement the in-path verification method provided in the second aspect.

According to a seventh aspect, a terminal is provided, and the terminal has a function of implementing a behavior of the in-path verification method in the third aspect. The terminal includes at least one module, and the at least one module is configured to implement the in-path verification method provided in the third aspect.

According to an eighth aspect, a terminal is provided, and the terminal has a function of implementing a behavior of the in-path verification method in the fourth aspect. The terminal includes at least one module, and the at least one module is configured to implement the in-path verification method provided in the fourth aspect.

According to a ninth aspect, a verification point is provided. A structure of the verification point includes a processor and a memory. The memory is configured to store a program that supports the verification point to perform the in-path verification method provided in the first aspect, and store data for implementing the in-path verification method provided in the first aspect. The processor is configured to execute the program stored in the memory.

According to a tenth aspect, a translation point is provided. A structure of the translation point includes a processor and a memory. The memory is configured to store a program that supports the translation point to perform the in-path verification method provided in the second aspect, and store data for implementing the in-path verification method provided in the second aspect. The processor is configured to execute the program stored in the memory.

According to an eleventh aspect, a terminal is provided. A structure of the terminal includes a processor and a memory. The memory is configured to store a program that supports the terminal to perform the in-path verification method provided in the third aspect, and store data for implementing the in-path verification method provided in the third aspect. The processor is configured to execute the program stored in the memory.

According to a twelfth aspect, a terminal is provided. A structure of the terminal includes a processor and a memory. The memory is configured to store a program that supports the terminal to perform the in-path verification method provided in the fourth aspect, and store data for implementing the in-path verification method provided in the fourth aspect. The processor is configured to execute the program stored in the memory.

According to a thirteenth aspect, a computer-readable storage medium is provided. The computer-readable storage medium stores instructions. When the instructions are run on a computer, the computer is enabled to perform the in-path verification method according to the first aspect, the second aspect, the third aspect, or the fourth aspect.

According to a fourteenth aspect, a computer program product including instructions is provided. When the computer program product runs on a computer, the computer is enabled to perform the in-path verification method according to the first aspect, the second aspect, the third aspect, or the fourth aspect.

According to a fifteenth aspect, an in-path verification system is provided. The in-path verification system includes a verification point and a terminal, the verification point is configured to implement the in-path verification method according to the first aspect, and the terminal is configured to implement the in-path verification method according to the third aspect.

According to a sixteenth aspect, an in-path verification system is provided. The in-path verification system includes a verification point, a translation point, and a terminal, the verification point is configured to implement the in-path verification method according to the first aspect, the translation point is configured to implement the in-path verification method according to the second aspect, and the terminal is configured to implement the in-path verification method according to the fourth aspect.

Technical effects obtained in the fifth aspect to the sixteenth aspect are similar to the technical effects obtained through corresponding technical means in the first aspect to the fourth aspect. Details are not described herein again.

## BRIEF DESCRIPTION OF DRAWINGS

FIG. 1 is a diagram of an IPsec transmission mode according to an embodiment of this application;
FIG. 2 is a diagram of an IPsec tunnel mode according to an embodiment of this application;
FIG. 3 is a schematic flowchart of an authentication server delivering a parameter such as a key to a terminal and a verification point in advance according to an embodiment of this application;
FIG. 4 is a schematic flowchart of a verification point performing in-path verification on a packet sent by a terminal according to an embodiment of this application;
FIG. 5 is a diagram of a format of an in-path verification header according to an embodiment of this application;
FIG. 6 is a diagram of an architecture of an in-path verification system according to an embodiment of this application;
FIG. 7 is a diagram of an architecture of another in-path verification system according to an embodiment of this application;
FIG. 8 is a flowchart of an in-path verification method according to an embodiment of this application;
FIG. 9 is a flowchart of an in-path verification method for a rich terminal according to an embodiment of this application;
FIG. 10 is a schematic flowchart of obfuscating a profile index according to an embodiment of this application;

FIG. 11 is a diagram of a format of an in-path verification header according to an embodiment of this application;

FIG. 12 is a flowchart of another in-path verification method according to an embodiment of this application;

FIG. 13 is a flowchart of another in-path verification method according to an embodiment of this application;

FIG. 14 is a diagram of a format of another in-path verification header according to an embodiment of this application;

FIG. 15 is a schematic flowchart of a translation point completing translation between a simplified mode in-path verification header and a fully flexible mode in-path verification header according to an embodiment of this application;

FIG. 16 is a flowchart of another in-path verification method according to an embodiment of this application;

FIG. 17 is a diagram of a structure of a verification point according to an embodiment of this application;

FIG. 18 is a diagram of a structure of a translation point according to an embodiment of this application;

FIG. 19 is a diagram of a structure of a terminal according to an embodiment of this application;

FIG. 20 is a diagram of a structure of a computer device according to an embodiment of this application;

FIG. 21 is a diagram of a structure of an in-path verification system 2100 according to an embodiment of this application; and

FIG. 22 is a diagram of a structure of another in-path verification system 2100 according to an embodiment of this application.

## DESCRIPTION OF EMBODIMENTS

To make objectives, technical solutions, and advantages of embodiments of this application clearer, the following further describes in detail implementations of this application with reference to the accompanying drawings.

It should be understood that "a plurality of" in this specification means two or more. In descriptions of this application, unless otherwise specified, "/" means "or", for example, A/B may mean "A or B"; "and/or" used herein is only used to describe an association relationship between associated objects, and indicates that three relationships may exist. For example, "A and/or B" may indicate the following: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

Before embodiments of this application are described in detail, an application scenario in embodiments of this application is first described.

Internet protocol security (Internet Protocol Security, IPsec) is security standard protocols proposed by the internet engineering task force (Internet Engineering Task Force, IETF), and is used to provide, at a network layer, security protection like confidentiality, integrity, and data source authentication for IP data packets.

The IPsec protocols include the following protocols.

(1) An authentication header (Authentication Header, AH) protocol provides security protection like data source authentication, integrity protection, and anti-replay protection for an IP data packet.

(2) An encapsulating security payload (Encapsulating Security Payload, ESP) protocol provides security protection like data source authentication, confidentiality protection, integrity protection, anti-replay protection, and limited transport stream confidentiality for an IP data packet.

(3) An internet key exchange (Internet Key Exchange Protocol, IKE) protocol provides security parameters such as an algorithm and a key for the AH protocol and the ESP protocol.

IPsec working modes include the following two modes.

(1) Transmission mode

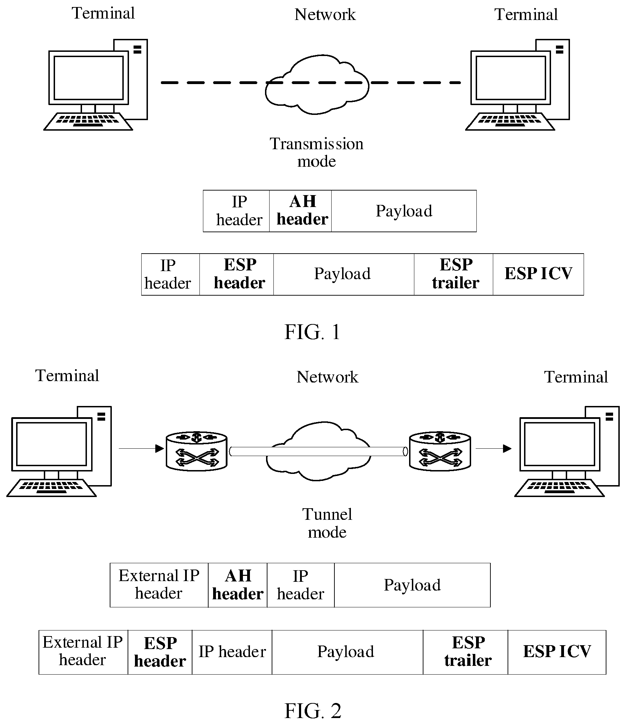

FIG. 1 is a diagram of an IPsec transmission mode according to an embodiment of this application. As shown in FIG. 1, in the transmission mode, only transmission layer data (that is, a payload (payload)) is used to calculate an AH header, an ESP header, or the like, and the AH header or the ESP header and the transmission layer data are placed behind an IP data packet header (that is, an IP header). Generally, the transmission mode is used for communication between two hosts (two terminals in FIG. 1), or communication between a host and a security gateway.

(2) Tunnel mode

FIG. 2 is a diagram of an IPsec tunnel mode according to an embodiment of this application. As shown in FIG. 2, in the tunnel mode, an entire IP data packet of a user is used to calculate an AH header or an ESP header. The AH header or the ESP header and an original IP data packet are encapsulated in a new IP data packet, and the AH header or the ESP header and the original IP data packet are placed behind an external IP header. Generally, the tunnel mode is used for communication between two security gateways.

IPsec can provide high security for the network layer. Therefore, IPsec has a wide application scope, and IPsec may be used, for security protection, for all application in which an IP protocol is used for data transmission. However, because there are a large quantity of parameters in IPsec, complexity and processing overheads of IPsec are high, and IPsec is not applicable to a scenario in which resources are limited, for example, an internet of things (Internet of Things, IoT) scenario. In addition, in IPsec, a security context needs to be maintained for each connection, for example, a key corresponding to encryption is maintained. This increases storage overheads of a verification point, and cannot be applied to a scenario in which there are a large quantity of terminals.

To avoid a problem of high costs caused by IPSec, an in-path verification technology may be used to provide security protection for data transmitted at the network layer. Currently, a feature of the in-path verification technology is an embedded identity (Identity document, ID). For example, a packet sent by a terminal carries CID (an ID indicating a packet source), and carries an integrity check value (integrity check value, ICV) generated based on a derived key (marked as DVK). A master key is deployed on the verification point. When receiving the packet sent by the terminal, the verification point determines a derived key in an in-path manner by using a key derivation algorithm and based on CID carried in the packet, and verifies ICV based on the derived key.

In the in-path verification technology, the verification point temporarily generates the derived key based on information carried in the packet. Therefore, the derived key does not need to be deployed on the verification point in advance. Compared with IPsec, the in-path verification technology can reduce the storage overheads of the verification point. In addition, a verification process of the in-path verification technology is simple, and therefore processing overheads are small. Therefore, the in-path verification technology is applicable to the scenario in which there are a large quantity of terminals.

It can be learned based on the in-path verification technology that, the in-path verification technology includes two aspects. First, an authentication server delivers a parameter like a key to the terminal and the verification point in advance, and second, the verification point performs in-path verification on the packet sent by the terminal.

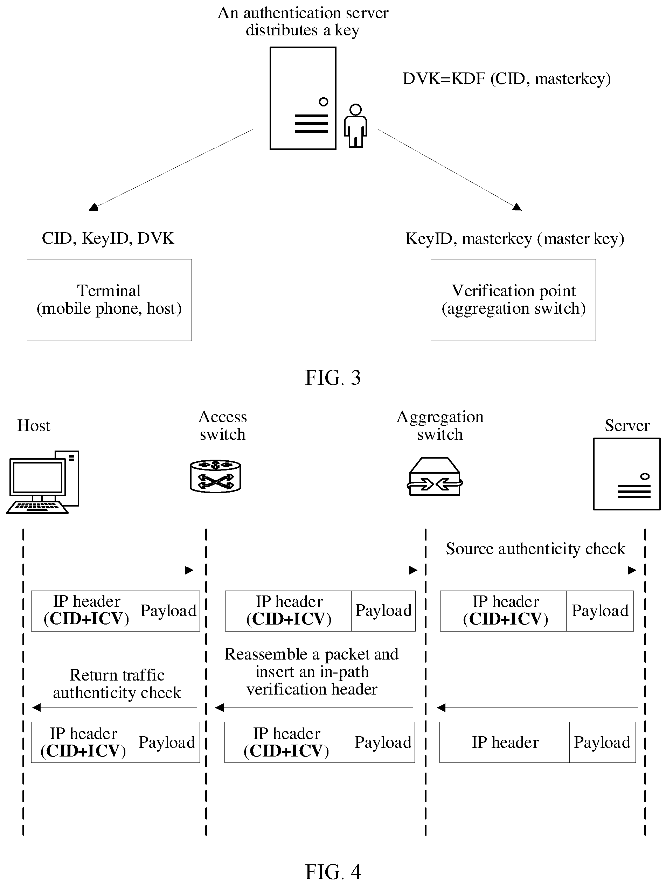

FIG. 3 is a schematic flowchart of an authentication server delivering a parameter like a key to a terminal and a verification point in advance according to an embodiment of this application. FIG. 4 is a schematic flowchart of a verification point performing in-path verification on a packet sent by a terminal according to an embodiment of this application.

As shown in FIG. 3, the authentication server delivers an identity (CID), KeyID (a master key identifier), and a derived key (DVK) to the terminal, and deploys KeyID and a master key (masterkey) to the verification point. DVK is obtained by the authentication server based on masterkey and CID by using a key derivation algorithm. For example, DVK=KDF (CID, masterkey), and KDF is the key derivation algorithm.

After the terminal receives CID, KeyID, and DVK, a subsequently sent packet includes an IP header and an in-path verification header. The in-path verification header carries CID, KeyID, and ICV calculated by using DVK. FIG. 4 illustrates that the in-path verification header carries CID and ICV (KeyID is not shown). After receiving the packet, an aggregation switch, as the verification point, searches for a local master key (masterkey) based on keyID carried in the packet, derives DVK by using the key derivation algorithm and based on CID carried in the packet and the local master key (masterkey), and verifies ICV in the packet based on derived DVK, that is, performs source authenticity check. If the verification succeeds, the aggregation switch sends the packet to a server. If the verification fails, the packet is discarded.

Subsequently, when the aggregation switch receives a response packet returned by the server based on the packet, because the server does not have an in-path verification function, the response packet sent by the server does not include an in-path verification header. Therefore, when receiving the response packet, the aggregation switch needs to reassemble and encrypt the response packet, to insert an in-path verification header into the response packet, where the in-path verification header carries CID and ICV generated when the response packet is encrypted; and then sends the reassembled response packet to the terminal. After receiving the response packet, the terminal verifies the response packet based on local DVK.

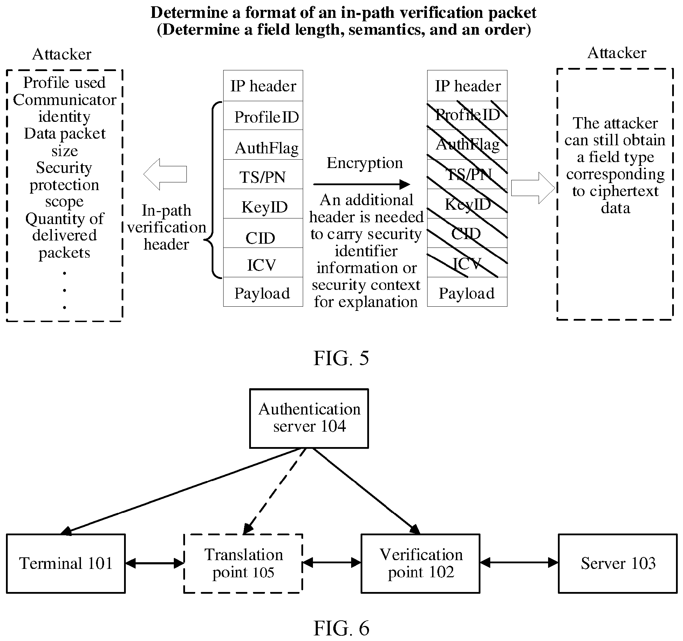

FIG. 5 is a diagram of a format of an in-path verification header according to an embodiment of this application. As shown in FIG. 5, because a profile index (ProfileID) in the in-path verification header is exposed in a network, an attacker can analyze, based on the profile index, a profile used in the in-path verification header, and further analyze, based on the profile, features such as an identity of a communicator, a data packet size, a security protection scope of a data packet, and a quantity of data packets. This brings a security risk. In addition, even if an encryption technology is used for confidentiality protection for the in-path verification header, because a relative position of each field in the encrypted in-path verification header is the same as that before encryption, the attacker can still obtain a field type corresponding to ciphertext data. In addition, to encrypt the in-path verification header, an additional header is needed to carry security identifier information or a security context for explanation. This increases network transmission pressure of the packet.

Based on the foregoing scenario, embodiments of this application provide an in-path verification method. In embodiments of this application, an in-path verification header may not be separately encrypted, but obfuscation processing is performed on a profile index carried in the in-path verification header, so that a profile index transmitted in a network is an obfuscated profile index. In this way, even if an attacker obtains the obfuscated profile index, a relative position of each field in the in-path verification header cannot be obtained based on the obfuscated profile index. Therefore, network security of a packet can be improved. In addition, in this manner, there is no need to separately encrypt the in-path verification header. Therefore, packet transmission pressure of the network can also be reduced.

The following describes in detail an in-path verification system, an in-path verification method, and a related apparatus that are provided in embodiments of this application.

FIG. 6 is a diagram of an architecture of an in-path verification system according to an embodiment of this application. As shown in FIG. 6, the in-path verification system includes a terminal 101, a verification point 102, a server 103, and an authentication server 104.

The terminal 101 and the verification point 102 may be connected in a wired or wireless manner for communication, and the verification point 102 and the server 103 may be connected in a wired or wireless manner for communication. The authentication server 104 is separately connected to the terminal 101 and the verification point 102 in a wired or wireless manner for communication.

The terminal 101 is configured to exchange data with the server 103. For example, the server 103 may be a server like a data center, or may be a server cluster.

The authentication server 104 is configured to deliver an in-path verification parameter to the terminal 101 and the verification point 102 in advance, so that the terminal 101 subsequently sends, based on a local in-path verification parameter, a packet including an in-path verification header, and the verification point 102 verifies the packet based on the local in-path verification parameter.

In some embodiments, the terminal 101 is configured to send a packet including an in-path verification header to the verification point 102, and the verification point 102 is configured to verify, based on the in-path verification header, the packet from the terminal 101, and forward the packet to the server 103 when the verification succeeds, to ensure security of the packet sent to the server 103. In addition, the verification point 102 is further configured to encrypt a response packet sent by the server 103 to the terminal, to ensure security of the response packet sent to the terminal 101.

In this scenario, the terminal 101 needs to generate an in-path verification header having a check function. In this embodiment of this application, such an in-path verification header is referred to as a fully flexible mode in-path verification header. Therefore, the terminal 101 needs to have abundant processing resources. In other words, this scenario is applicable to a scenario in which the terminal 101 is a rich terminal. For example, the terminal 101 is a rich terminal like a host.

Optionally, in some other embodiments, as shown in FIG. 6, the in-path verification system may further include a translation point 105. The translation point 105 is separately connected to the terminal 101 and the verification point 102 in a wired or wireless manner for communication. The translation point 105 is further connected to the authentication server 104 in a wired or wireless manner for communication.

In this scenario, the authentication server 104 further delivers an in-path verification parameter to the translation point 105.

The terminal 101 is configured to send a packet including a simplified mode in-path verification header to the translation point 105. The translation point 105 is configured to translate the simplified mode in-path verification header into a fully flexible mode in-path verification header, and send a packet including the fully flexible mode in-path verification header to the verification point 102. The verification point 102 is configured to verify the packet based on the fully flexible mode in-path verification header, and forward the packet to the server 103 when the verification succeeds, to ensure security of the packet sent to the server 103.

In addition, the verification point 102 is further configured to encrypt a response packet sent by the server 103 to the terminal, to generate a response packet including a fully flexible mode in-path verification header, and send the response packet including the fully flexible mode in-path verification header to the translation point 105. The translation point 105 is configured to translate the fully flexible mode in-path verification header into a simplified mode in-path verification header, and send a response packet including the simplified mode in-path verification header to the terminal 101.

The fully flexible mode in-path verification header carries more information than the simplified mode in-path verification header. In the foregoing manner, overheads of the terminal 101 can be reduced, and security of a packet sent to the terminal 101 can be further ensured. Therefore, in this scenario, the terminal 101 does not need to generate an in-path verification header having a check function. Correspondingly, the terminal 101 does not need to have abundant processing resources. Therefore, this scenario is applicable to a scenario in which the terminal 101 is a resource-limited terminal. For example, the terminal 101 is a resource-limited terminal like a watch.

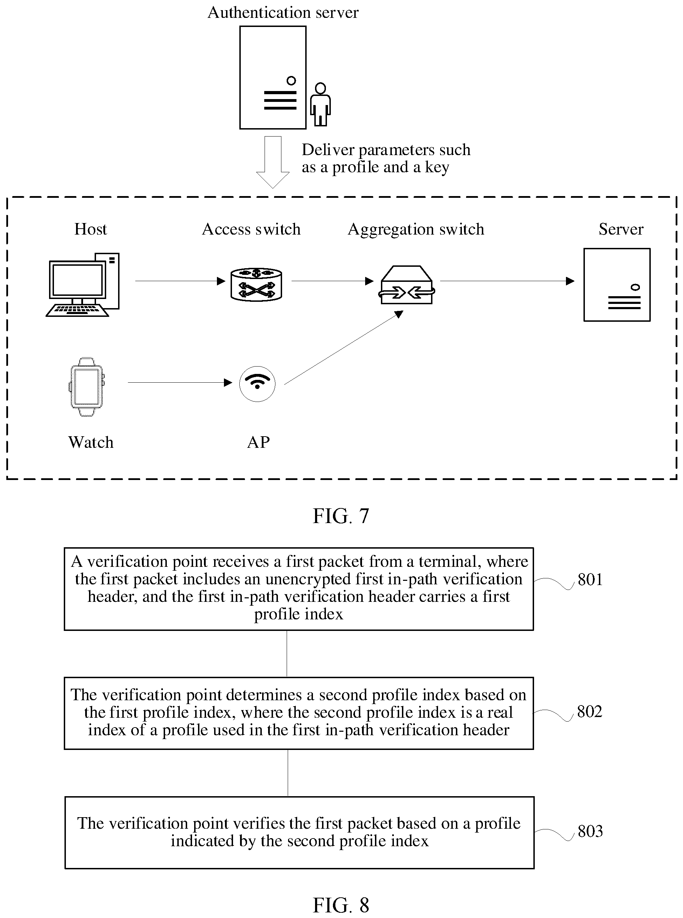

In addition, in some embodiments, the verification point may be implemented by an aggregation switch in a network, and the translation point may be implemented by an access switch such as an AP in the network. FIG. 7 is a diagram of an architecture of another in-path verification system according to an embodiment of this application.

As shown in FIG. 7, the in-path verification system includes a rich terminal like a host and a resource-limited terminal like a watch. The host is connected to an aggregation switch through an access switch, the watch is connected to the aggregation switch through an access point (access point, AP), and the aggregation switch is connected to a server.

The aggregation switch, used as a verification point, is configured to verify a packet sent by the terminal like the host or the watch. The AP is used as a translation point to translate a simplified mode in-path verification header in a packet sent by the resource-limited terminal like the watch, and translate a fully flexible mode in-path verification header in a packet sent by the aggregation switch. A specific implementation is described in detail below, and is not described herein.

The system shown in FIG. 7 is used to describe an application scenario of this embodiment of this application by using an example. Optionally, in this embodiment of this application, the verification point may be implemented by any forwarding device close to the server, and the translation point may be implemented by any forwarding device close to the terminal. Examples are not described one by one herein.

FIG. 8 is a flowchart of an in-path verification method according to an embodiment of this application. As shown in FIG. 8, the method includes the following step 801 to step 803.

**Step 801:** A verification point receives a first packet from a terminal, where the first packet includes an unencrypted first in-path verification header, and the first in-path verification header carries a first profile index.

In this embodiment of this application, to avoid separately encrypting an in-path verification header and increasing packet transmission pressure of a network, the in-path verification header in the first packet may not be encrypted, but a profile index in the in-path verification header is obfuscated, so that a profile index transmitted in the network is an obfuscated profile index. In this way, even if an attacker obtains the obfuscated profile index, a relative position of each field in the in-path verification header cannot be obtained based on the obfuscated profile index. Therefore, network security of a packet can be improved.

Therefore, the first profile index carried in the first in-path verification header in the first packet received by the verification point is not a real index of a profile used in the first in-path verification header.

**Step 802:** The verification point determines a second profile index based on the first profile index, where the second profile index is the real index of the profile used in the first in-path verification header.

Because the first profile index is not the real index of the profile used in the first in-path verification header, to parse the first in-path verification header, the verification point needs to determine, based on the first profile index, the real index of the profile used in the first in-path verification header, that is, the second profile index.

**Step 803:** The verification point verifies the first packet based on a profile indicated by the second profile index.

After obtaining the second profile index, the verification point may obtain the corresponding profile based on the second profile index, and further parse the first in-path verification header based on a definition of each field in the profile, to verify the first packet based on each field in the first in-path verification header.

It should be noted that positions of all profile indexes in the in-path verification header are fixed. Therefore, the verification point may obtain the first profile index before obtaining the profile.

Based on the embodiment shown in FIG. 8, when sending a packet, the terminal may not separately encrypt an in-path verification header, but perform obfuscation processing on a profile index carried in the in-path verification header, so that a profile index transmitted in the network is an obfuscated profile index. In this way, even if the attacker obtains the obfuscated profile index, a relative position of each field in the in-path verification header cannot be obtained based on the obfuscated profile index. Therefore, network security of the packet can be improved. In addition, in this manner, there is no need to separately encrypt the in-path verification header. Therefore, packet transmission pressure of the network can also be reduced.

It can be learned based on the system architectures shown in FIG. 6 and FIG. 7 that different in-path verification methods are provided for a rich terminal and a resource-limited terminal in embodiments of this application. The following provides descriptions and explanations by using two embodiments.

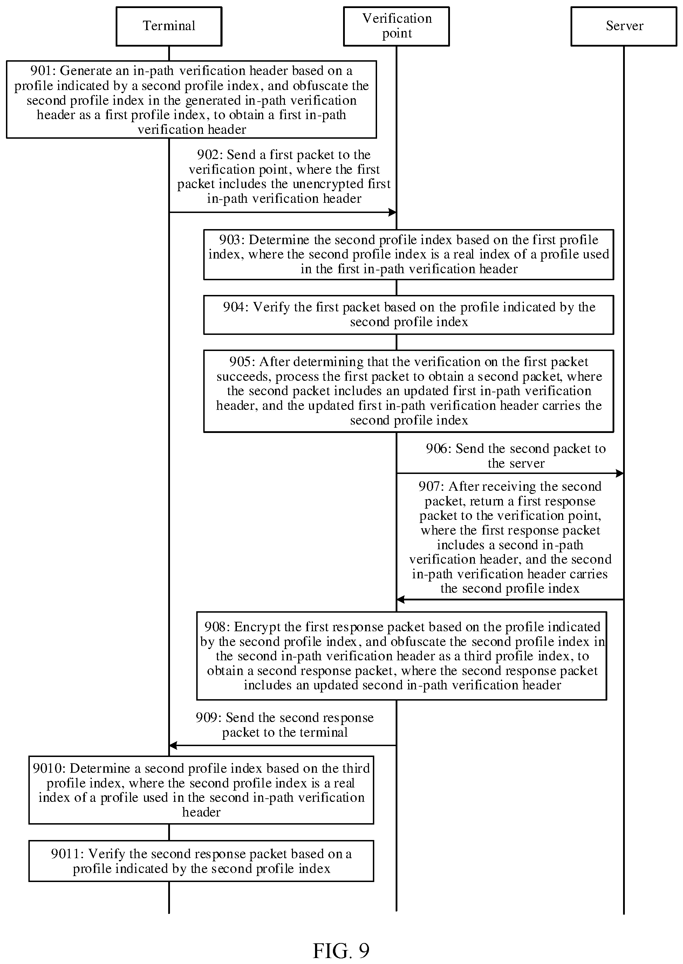

FIG. 9 is a flowchart of an in-path verification method for a rich terminal according to an embodiment of this application. As shown in FIG. 9, the method includes the following steps.

**Step 901:** A terminal generates an in-path verification header based on a profile indicated by a second profile index, and obfuscates the second profile index in the generated in-path verification header as a first profile index, to obtain a first in-path verification header.

To prevent a real profile index from being exposed in a network, after generating an in-path verification header based on the real profile index, the terminal obfuscates the real profile index in the in-path verification header as an obfuscated profile index. In other words, the first profile index carried in the first in-path verification header is a obfuscated profile index.

In some embodiments, the terminal locally stores a first derived key, and the first derived key is delivered in advance by an authentication server to the terminal. The authentication server may obtain the first derived key based on a master key and a key derivation parameter (which may be marked as DVKRandom). In addition, to facilitate subsequent generation of the first derived key by a verification point, the authentication server further delivers a master key identifier and the key derivation parameter to the terminal in advance, so that the terminal subsequently carries the master key identifier and the key derivation parameter in a packet in an in-path manner. In this way, the verification point does not need to locally store the first derived key, but temporarily generates the first derived key based on the master key identifier and the key derivation parameter that are carried in the packet in the in-path manner.

The real profile index is obfuscated by using a parameter like a key in in-path verification. This increases difficulty in cracking the real profile index by an attacker.

In this scenario, an implementation in which the terminal obfuscates the second profile index in the generated in-path verification header as the first profile index may be: performing first obfuscation processing on the locally stored first derived key and the second profile index to obtain the first profile index. Correspondingly, the first in-path verification header further carries the master key identifier and the key derivation parameter, so that the verification point subsequently generates the first derived key based on the master key identifier and the key derivation parameter, and then restores the real profile index based on the first derived key.

For example, an implementation of performing the first obfuscation processing on the locally stored first derived key and the second profile index to obtain the first profile index may be: obtaining a first key truncation bit quantity; obtaining a plurality of first bits through truncation from the first derived key based on the first key truncation bit quantity; and performing an exclusive OR operation on the plurality of first bits and the first profile index to obtain the second profile index. In this scenario, the first in-path verification header further carries the first key truncation bit quantity, so that the verification point subsequently restores the real profile index.

A logical operation on the real profile index and a derived key is implemented by designing a key truncation bit quantity, to obfuscate the real profile index. This manner is easy to implement.

The first key truncation bit quantity may be currently randomly selected by the terminal. In this way, when sending different packets, the terminal may obfuscate a same profile index in different manners, thereby further improving security protection for the packet sent by the terminal.

Optionally, the first key truncation bit quantity may be alternatively delivered by the authentication server. In this scenario, to improve security protection for a packet sent by the terminal, the authentication server may periodically update the first key truncation bit quantity, and deliver a periodically updated first key truncation bit quantity to the terminal.

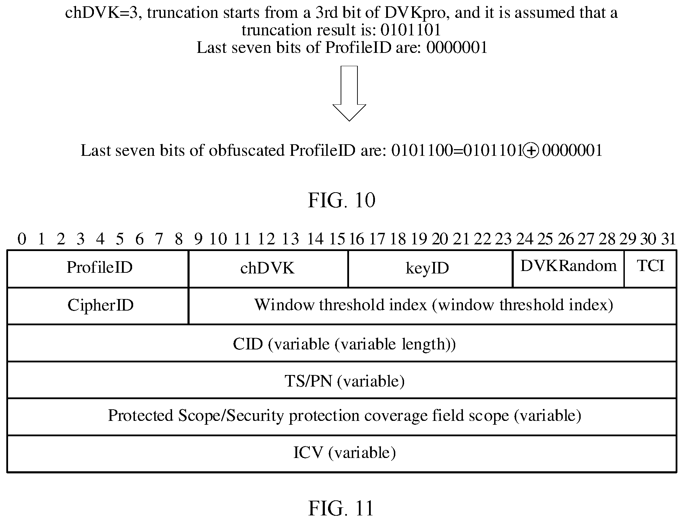

FIG. 10 is a schematic flowchart of obfuscating a profile index according to an embodiment of this application. As shown in FIG. 10, it is assumed that the first key truncation bit quantity (marked as chDVK in FIG. 10) is 3, and the first derived key (marked as DVKpro in FIG. 10) has 9 bits in total. In this case, truncation starts from a 3rd bit of the first derived key, and it is assumed that bits obtained through truncation are 0101101. An exclusive OR operation is performed on the bits 0101101 obtained through truncation and last seven bits of the real profile index (ProfileID). If the last seven bits of the real profile index are 0000001, last seven bits of an obfuscated profile index are changed to 0101100.

Optionally, in this embodiment of this application, the real profile index may be obfuscated in another manner. Examples are not described one by one herein. When the real profile index is obfuscated in another manner, obfuscation information may also be carried in the first in-path verification header. The obfuscation information indicates information used when the second profile index is obfuscated as the first profile index, so that the verification point can subsequently restore the real profile index based on the obfuscation information.

Optionally, the obfuscation information may not be carried in the first in-path verification header. In this scenario, the authentication server delivers the obfuscation information to the verification point in advance, so that the verification point can restore the real profile index based on the obfuscation information. However, in this manner, storage overheads of the verification point are increased to some extent.

In addition, for subsequently verifying the first packet by the verification point, the first in-path verification header further carries a source identifier (CID) and ICV generated based on some fields except the first in-path verification header in the first packet. The source identifier (CID) is also downloaded by the authentication server in advance.

ICV is generated after the terminal encrypts, based on a second derived key, the some fields except the first in-path verification header in the first packet. The verification point may subsequently verify the first packet based on the source identifier (CID), the master key identifier (keyID), and ICV. A detailed implementation is described in the following embodiment, and is not described herein.

An implementation in which the terminal generates ICV based on the some fields except the first in-path verification header in the first packet may be: encrypting, based on the second derived key and a cryptographic algorithm specified in the second profile index, the some fields except the first in-path verification header in the first packet, to obtain ciphertext and ICV. The second derived key is also delivered by the authentication server in advance.

The some fields except the first in-path verification header in the first packet may be referred to as fields in a security coverage range, that is, fields used for security protection.

FIG. 11 is a diagram of a format of an in-path verification header according to an embodiment of this application. As shown in FIG. 11, the in-path verification header includes a profile index (ProfileID), a key truncation bit quantity (chDVK), a master key identifier (KeyID), a key derivation parameter (DVKRandom), a transmission configuration indicator (transmission configuration indicator, TCI), an encryption algorithm suite identifier (CipherID), a window threshold index (Window threshold index), a source identifier (CID), a timestamp/sequence number (Time Stamp/Packet number, TS/PN), a security protection coverage field scope (Protected Scope, PS), and ICV.

Table 1 exemplifies meanings of fields in FIG. 11.

Table 1

| Field | Length/bits | Description |
|---|---|---|
| ProfileID | 8 | A customized function set, a 1st bit is 1, indicating a fully flexible mode. |
| chDVK | 8 | Used to select a key. |
| TCI | 2 | A 1st bit indicates a meaning of a TS/PN field, where 0 indicates a sequence number, and 1 indicates a timestamp. A 2nd bit indicates a length of the TS/PN field, where 0 indicates 32, and 1 indicates 64. |
| CipherID | 6 | Indicates that a suite is used in a cryptographic algorithm. |
| KeyID | 8 | Indicates an ID of a master key used for in-path verification (that is, an ID of MasterKey). |
| Window threshold index | 8 | A window threshold index, for anti-replay protection. |
| CID | 32/64 | Indicates a source ID (that is, a source identifier) of a packet. |
| DVKRandom | 64 | Used to derive an obfuscation key. |
| TS/PN | 32/64 | For anti-replay protection. |
| Protected Scope (PS) | Variable length | Indicates security protection coverage field scope, including a type and a plurality of groups of (offset, length), where offset represents an offset, length represents a length, and one group of (offset, length) indicates a field in security protection coverage, where type indicates a type of a field in a security coverage scope. |
| ICV | 32/64/128/256 | Used for integrity verification and check. |

FIG. 11 is used as an example to describe a format of an in-path verification header provided in this embodiment of this application. Optionally, the format of the in-path verification header provided in this embodiment of this application may not be limited to the format shown in FIG. 11. Any packet header that can implement a function of the in-path verification header provided in this embodiment of this application may be used in this embodiment of this application. Examples are not described one by one herein.

**Step 902:** The terminal sends the first packet to the verification point, where the first packet includes the unencrypted first in-path verification header, and the first in-path verification header carries the first profile index.

Correspondingly, the verification point receives the first packet from the terminal, where the first packet includes the unencrypted first in-path verification header, and the first in-path verification header carries the first profile index.

**Step 903:** The verification point determines the second profile index based on the first profile index, where the second profile index is a real index of a profile used in the first in-path verification header.

In some embodiments, the first in-path verification header further carries a master key identifier and a key derivation parameter. In this scenario, an implementation in which the verification point determines the second profile index based on the first profile index may be: determining a first derived key based on the master key identifier and the key derivation parameter; and performing first obfuscation processing on the first derived key and the first profile index to obtain the second profile index.

An implementation of determining the first derived key based on the master key identifier and the key derivation parameter may be: The verification point obtains a locally stored master key based on the master key identifier, and generates the first derived key based on the master key and the key derivation parameter by using a key derivation algorithm.

The master key identifier and the key derivation parameter are carried in the packet, so that the verification point temporarily generates information required for restoring the real profile index. This can reduce storage overheads of the verification point, and increase difficulty in cracking the real profile index by the attacker.

For example, the first in-path verification header further carries the first key truncation bit quantity. In this scenario, an implementation of performing the first obfuscation processing on the first derived key and the first profile index to obtain the second profile index may be: obtaining a plurality of first bits through truncation from the first derived key based on the first key truncation bit quantity; and performing an exclusive OR operation on the plurality of first bits and the first profile index to obtain the second profile index.

In the foregoing manner, the real profile index can be obfuscated, and the first key truncation bit quantity is carried in the packet, so that the verification point can perform an exclusive OR operation on different bit sequences based on information carried in the packet, to obfuscate the real profile index, and the storage overheads of the verification point can also be reduced.

For another example, if the first in-path verification header does not carry the first key truncation bit quantity, and the verification point locally stores the first key truncation bit quantity delivered by the authentication server, the verification point may first obtain the first key truncation bit quantity from a local storage, and then determine the second profile index.

Optionally, when the first verification header carries other information that can be for indication and that is used when the second profile index is obfuscated as the first profile index (collectively referred to as obfuscation information), the verification point may also restore the real profile index based on the obfuscation information. Examples are not described one by one herein.

**Step 904:** The verification point verifies the first packet based on the profile indicated by the second profile index.

In some embodiments, to further improve difficulty in cracking the real profile index by the attacker, the authentication server may deliver a plurality of profiles and profile indexes respectively corresponding to the plurality of profiles to the verification point in advance. Each profile in the plurality of profiles is used to at least define a position of each field in a corresponding in-path verification header, and at least one same field in different profiles has different positions.

In other words, in this embodiment of this application, ranks of same fields defined in different profiles may be different. In this way, the attacker cannot analyze a traffic feature based on an order of fields in the in-path verification header.

In this scenario, an implementation in which the verification point verifies the first packet based on the profile indicated by the second profile index may be: obtaining, from the plurality of profiles, the profile indicated by the second profile index; obtaining a value of at least one field in the first in-path verification header based on the profile indicated by the second profile index; and verifying the first packet based on the value of the at least one field in the first in-path verification header.

For example, if the second profile index is 1, the following content is defined in a profile searched based on the profile index 1.

(1) An order of the fields in the in-path verification header is as follows:

ProfileID+chDVK+KeyID+DVKRandom+TCI+CipherID+Windowthresholdindex+  CID+TS/PN+Protected  Scope +ICV+padding.

(2) A length of CID is 32 bits, a length of ICV is 32 bits, and a length of padding is 16 bits.

(3) A field in a security protection scope is a source/destination IP address.

A position of each field in the first in-path verification header may be determined based on an order of fields and a length of each field that are defined in the profile indicated by the second profile index, to obtain a value of each field, and verify the first packet (that is, perform in-path verification on the first packet) based on the value of each field.

An implementation of verifying the first packet based on the value of each field may be: searching for a window threshold based on a value of the Window threshold index field in the first verification header, and determining whether a value of the TS/PN field in the first verification header exceeds the window threshold; and if the value does not exceed the window threshold, determining that the TS/PN field in the first verification header is valid, and continuing the verification; or if the value exceeds the window threshold, discarding the packet.

After it is determined that the TS/PN field in the first verification header is valid, based on a cryptograph protection scope specified by a value of a PS field in the first verification header, the second derived key (which may be marked as DVKver) is used to invoke an algorithm indicated by CipherID in the first verification header, to decrypt ciphertext and ICV. If the decryption succeeds, it is determined that the in-path verification succeeds. If the decryption fails, the packet is discarded.

The second derived key is determined by the verification point based on the master key identifier and the source identifier (CID) that are carried in the first in-path verification header. For example, the verification point may obtain the locally stored master key based on the master key identifier carried in the first in-path verification header, and obtain the second derived key by using the key derivation algorithm based on the master key and the source identifier (CID).

**Step 905:** After determining that the verification on the first packet succeeds, the verification point processes the first packet to obtain a second packet, where the second packet includes an updated first in-path verification header, and the updated first in-path verification header carries the second profile index.

That the verification point processes the first packet includes: replacing ciphertext in the first packet with plaintext based on a decryption result of the first packet, updating the first profile index in the first in-path verification header in the first packet to the real second profile index, and updating an outer IP header based on a routing table, so that an obtained packet is the second packet.

An objective of updating the outer IP header is to update a destination address in the outer IP header, to forward the second packet to a server.

Because a network between the verification point and the server is usually secure, the updated real profile index may be in the second packet.

**Step 906:** The verification point sends the second packet to the server.

The verification point forwards the second packet by querying the local routing table based on the outer IP header in the second packet, to forward the second packet to the server.

**Step 907:** After receiving the second packet, the server returns a first response packet to the verification point, where the first response packet includes a second in-path verification header, and the second in-path verification header carries the second profile index.

Correspondingly, the verification point receives the first response packet from the server.

In this embodiment of this application, to avoid a need of reassembling an in-path verification header by the verification point for a packet sent by the server, the server may directly include the second in-path verification header in the first response packet. In this way, after receiving the first response packet, the verification point only needs to update values of some fields in the second in-path verification header in the first response packet, and does not need to reassemble the first response packet. Therefore, processing overheads of the verification point can be reduced.

The server itself does not participate in an in-path verification process. Therefore, the server may directly use an in-path verification header in the received second packet as the second in-path verification header, to generate the first response packet. Therefore, the second in-path verification header may carry the real second profile index.

In addition, because the server does not encrypt the first response packet, but only adds the second in-path verification header to the first response packet, ICV in the second in-path verification header is currently set to 0.

In addition, the server may update a Window threshold index field and a TS/PN field in the second in-path verification header, for anti-replay protection.

Optionally, the server may further set a value of a PS field in the second in-path verification header, to indicate which fields in the first response packet currently need to be protected by the server. Optionally, the server may alternatively not set the value of the PS field in the second in-path verification header. In this case, the verification point subsequently sets the value of the PS field in the second in-path verification header.

**Step 908:** The verification point encrypts the first response packet based on the profile indicated by the second profile index, and obfuscates the second profile index in the second in-path verification header as a third profile index, to obtain a second response packet, where the second response packet includes an updated second in-path verification header.

Because a network between the verification point and the terminal is easily exploited by the attacker, the verification point needs to encrypt the first response packet. In addition, to prevent the real profile index from being exposed to the network, the verification point may obfuscate the second profile index in the second in-path verification header as the third profile index.

Because the server directly uses the in-path verification header in the received second packet as the second in-path verification header, and fields in the in-path verification header in the second packet are the same as those in the first in-path verification header except a profile index. Therefore, the verification point may perform obfuscation processing based on information carried in the second in-path verification header, so that the verification point does not need to pre-store related information, and storage overheads of the verification point are reduced.

In some embodiments, when the first in-path verification header carries the master key identifier and the source identifier, an implementation in which the verification point encrypts the first response packet based on the profile indicated by the second profile index may be: searching for a local master key based on the master key identifier in the second in-path verification header, determining the second derived key based on the master key and a source identifier in the second in-path verification header by using the key derivation algorithm, determining a scope (PS) in which security protection needs to be performed on a field in the first response packet, and encrypting the field in the security protection scope based on the second derived key and an encryption algorithm specified in the second in-path verification header, to obtain ciphertext and ICV.

After encrypting the first response packet, the verification point may update a related field in the second in-path verification header based on a parameter in an encryption process. For example, the PS field and ICV field in the second in-path verification header are updated.

In addition, in some embodiments, when the first in-path verification header carries the master key identifier and the key derivation parameter, the second in-path verification header further carries the master key identifier and the key derivation parameter that are in the first in-path verification header.

In this scenario, an implementation in which the verification point obfuscates the second profile index in the second in-path verification header as the third profile index may be: determining the first derived key based on the master key identifier and the key derivation parameter; and performing second obfuscation processing on the first derived key and the second profile index to obtain the third profile index.

An implementation of performing the second obfuscation processing on the first derived key and the second profile index to obtain the third profile index may be: obtaining a second key truncation bit quantity; obtaining a plurality of second bits through truncation from the first derived key based on the second key truncation bit quantity; and performing an exclusive OR operation on the plurality of second bits and the second profile index to obtain the third profile index, where the updated second in-path verification header further carries the second key truncation bit quantity.

For example, when the first in-path verification header further carries the first key truncation bit quantity, the verification point may directly use the first key truncation bit quantity as the second key truncation bit quantity. In this case, the third profile index obtained through obfuscation by the verification point is the same as the first profile index obtained through obfuscation by the terminal.

For another example, the verification point may randomly select a value as the second key truncation bit quantity. In this case, the third profile index obtained through obfuscation by the verification point is different from the first profile index obtained through obfuscation by the terminal. In addition, in this case, the verification point further needs to update a value of a key truncation bit quantity field in the second in-path verification header to the second key truncation bit quantity randomly selected by the verification point.

**Step 909:** The verification point sends the second response packet to the terminal.

Correspondingly, the terminal receives the second response packet sent by the verification point. The second response packet includes the unencrypted second in-path verification header, and the second in-path verification header carries the third profile index.

**Step 9010:** The terminal determines a second profile index based on the third profile index, where the second profile index is a real index of a profile used in the second in-path verification header.

After the terminal receives the second response packet, because the third profile index carried in the second response packet is an obfuscated profile index, the terminal needs to restore the real second profile index based on the third profile index, to perform in-path verification on the second response packet based on the real second profile index.

In some embodiments, the terminal stores the first derived key. In this scenario, an implementation in which the terminal determines the second profile index based on the third profile index may be: performing second obfuscation processing on the first derived key and the third profile index to obtain the second profile index.

For example, the second in-path verification header further carries the second key truncation bit quantity. In this case, an implementation of performing the second obfuscation processing on the first derived key and the third profile index may be: obtaining a plurality of second bits through truncation from the first derived key based on the second key truncation bit quantity; and performing an exclusive OR operation on the plurality of second bits and the third profile index to obtain the second profile index.

For a specific implementation, refer to the foregoing process of restoring the real profile index by the verification point. Details are not described herein again.

**Step 9011:** The terminal verifies the second response packet based on a profile indicated by the second profile index.

The terminal may obtain, from the local storage based on the second profile index, the profile indicated by the second profile index, and then obtain, based on the profile indicated by the second profile index, a value of each field in the in-path verification header in the second response packet, to verify the second response packet based on the value of each field in the in-path verification header.

For a specific implementation, refer to the foregoing process of verifying the first packet by the verification point. Details are not described herein again. A difference lies in that the terminal locally stores the second derived key. Therefore, the terminal does not need to generate the second derived key, and directly verifies the second response packet based on the locally stored second derived key.

Based on the embodiment shown in FIG. 9, a profile index carried in a packet transmitted between the terminal and the verification point is an obfuscated profile index. In this way, uncertainty may be introduced, to shield details of each field in an in-path verification header, and improve in-path verification security. In addition, the server constructs an in-path verification header in a response packet returned to the terminal. In this way, the verification point does not need to perform packet reassembly, performance of the verification point (for example, an aggregation switch) is improved, and processing overheads of the verification point are reduced.

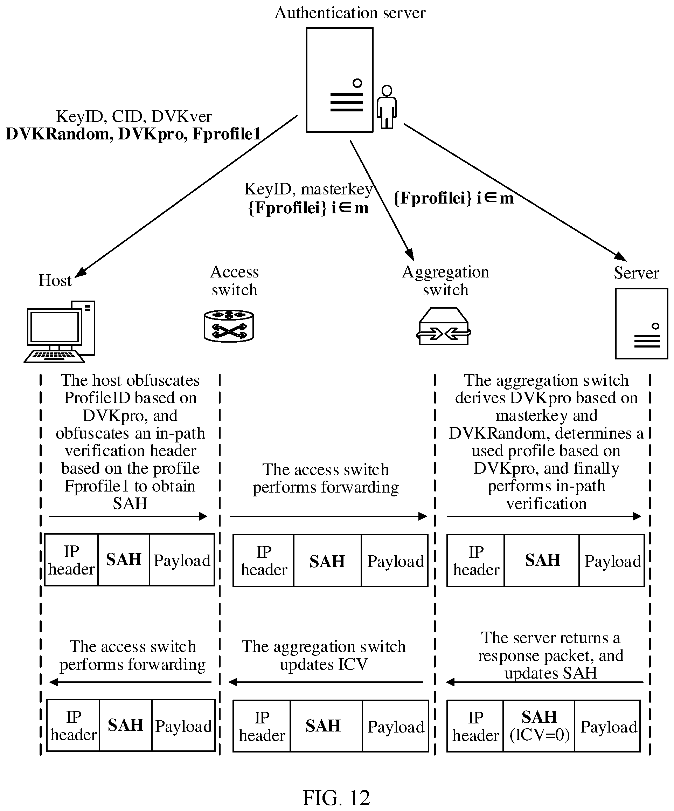

The following uses FIG. 12 as an example to further describe the embodiment shown in FIG. 9. FIG. 12 is used as an example to describe the embodiment shown in FIG. 9, and does not constitute a limitation on the embodiment shown in FIG. 9.

As shown in FIG. 12, in addition to delivering KeyID, CID, and DVKver (the second derived key) to a host (as the rich terminal), the authentication server further delivers DVKRandom (the key derivation parameter) to the terminal, for the verification point to derive a key DVKpro (the first derived key). DVKpro=KDF (masterkey, DVKRandom). In addition, the authentication server further delivers a fully flexible mode profile Fprofile1 to the terminal. Moreover, the authentication server delivers KeyID and masterkey to the aggregation switch (as the verification point), and also delivers {Fprofilei} (i∈m), indicating that m fully flexible mode profiles are delivered to the aggregation switch.

For ease of distinguishing from a subsequent simplified mode profile, the profile in the embodiment in FIG. 9 is referred to as a fully flexible mode profile. A difference between the simplified mode profile and the fully flexible mode profile is described in detail in subsequent embodiments, and is not described herein.

After the authentication server delivers the foregoing parameters to the host and the aggregation switch, an interaction process between the host, the server, and the verification point includes the following steps.

1. The host sends a packet to the server.

(1) The host generates the packet.
(2) The host determines a profile and ProfileID.
(3) The host randomly selects a chDVK value, and obfuscates ProfileID based on a first derived key DVKpro.
(4) Determine values of TCI, CipherID, Window threshold index, KeyID, CID, TS/PN, and PS fields in an in-path verification header.
(5) Use a second derived key DVKver based on the profile and a protection scope specified in a PS field, to invoke an algorithm indicated by CipherID to perform encryption, to obtain ciphertext and ICV.
(6) Generate a source in-path verification header (marked as a source authentication header (source authentication header, SAH) in FIG. 12) based on a field order determined in the profile.

2. The aggregation switch verifies the packet.

(1) Search for a master key masterkey based on the KeyID field in the in-path verification header (SAH), and generate the second derived key DVKver and the first derived key DVKpro.
(2) Determine a used profile based on ProfileID, chDVK, and DVKpro, and obtain each field in the in-path verification header.
(3) Perform in-path verification.
(4) Search for a window threshold based on the Window threshold index field in SAH and determine whether the TS/PN field is valid. If the TS/PN field is valid, continue the verification. If the TS/PN field is invalid, discard the packet.
(5) Use the second derived key DVKver based on the profile and a cryptograph protection scope specified in the PS field to invoke the algorithm indicated by CipherID to perform decryption. If the decryption succeeds, update real ProfileID as a profile index, and forward the packet. If the decryption fails, discard the packet.

3. After receiving the packet, the server saves SAH for packet return.
4. The server returns a packet to the host.
That the server generates the packet includes: reconstructing received SAH, setting the Window threshold index, TS/PN, and PS fields, and setting ICV to 0.
5. The aggregation switch verifies the packet.

(1) Search for the master key masterkey based on the KeyID field in SAH, and generate the second derived key DVKver and the first derived key DVKpro.
(2) Obtain each field in the in-path verification header based on the profile indicated by ProfileID.
(3) Update SAH: Use the second derived key DVKver based on the profile and the protection scope specified in the PS field, to invoke the algorithm indicated by CipherID to perform encryption, to obtain ciphertext and ICV, and replace original ICV and plaintext in the packet.
(4) Obfuscate profileID in SAH based on ProfileID, chDVK, and DVKpro.

6. The host receives the packet.

(1) Determine the used profile based on ProfileID, chDVK, and DVKpro, and obtain each field in the in-path verification header.
(2) Perform in-path verification.

Search for the window threshold based on the Window threshold index field in SAH, and determine whether the TS/PN field is valid. If the TS/PN field is valid, continue the verification. If the TS/PN field is invalid, discard the packet. Use the second derived key DVKver based on a ProfileID profile in SAH and the cryptograph protection scope specified in the PS field, to invoke the algorithm indicated by CipherID to perform decryption. If the decryption succeeds, receive the packet. If the decryption fails, discard the packet.

For a detailed implementation of each step in FIG. 12, refer to the embodiment shown in FIG. 9. Details are not described herein again.

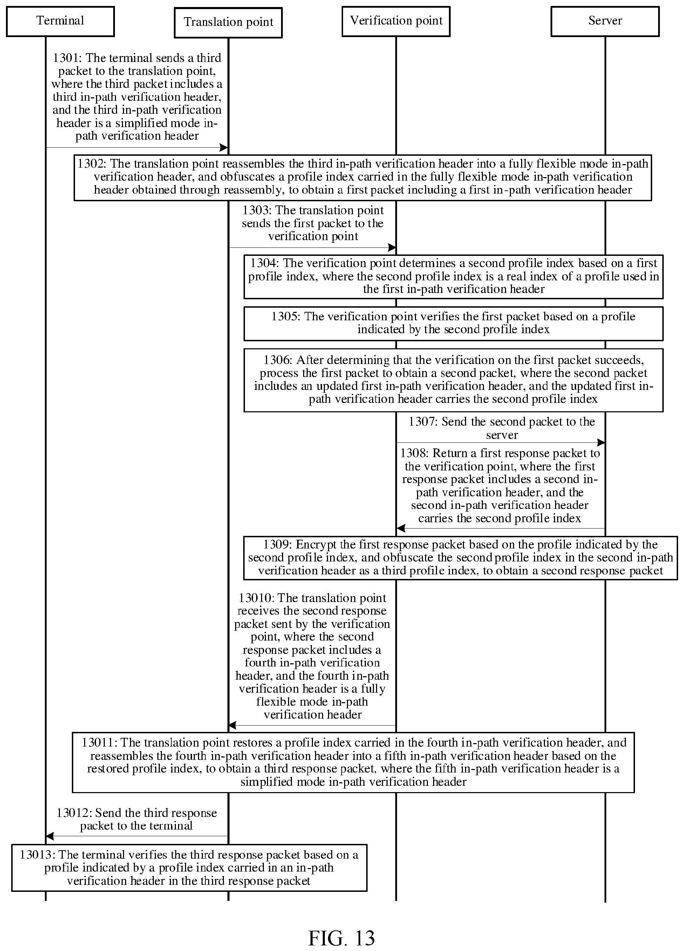

FIG. 13 is a flowchart of an in-path verification method for a resource-limited terminal according to an embodiment of this application. As shown in FIG. 13, the method includes the following steps.

**Step 1301:** A terminal sends a third packet to a translation point, where the third packet includes a third in-path verification header, and the third in-path verification header is a simplified mode in-path verification header.

A profile index carried in the third in-path verification header is a real index of a profile used in the third in-path verification header.

Correspondingly, the translation point receives the third packet from the terminal, where the third packet includes the third in-path verification header, and the third in-path verification header is the simplified mode in-path verification header.

A value of a reference bit of a profile index carried in the third in-path verification header is a first bit value, to indicate that the third in-path verification header is the simplified mode in-path verification header. The reference bit is designed, so that the translation point can quickly recognize the simplified mode in-path verification header.

For example, in this embodiment of this application, a $1^{st}$ bit of the profile index may indicate a simplified mode or a fully flexible mode. For example, when a bit value of the $1^{st}$ bit of the profile index is 0, a profile indicated by the profile index is a simplified mode profile, and an in-path verification header using the simplified mode profile is a simplified mode in-path verification header. The profile index may be referred to as a simplified mode profile index. When a bit value of the $1^{st}$ bit of the profile index is 1, a profile indicated by the profile index is a fully flexible mode profile, and an in-path verification header using the fully flexible mode profile is a fully flexible mode in-path verification header. The profile index may be referred to as a fully flexible mode profile index.

In this case, when obfuscation processing is performed on the profile index, it needs to avoid obfuscation processing on a bit value of a reference bit in the profile index, to avoid affecting a difference between the simplified mode in-path verification header and the fully flexible mode in-path verification header.

To reduce overheads of the resource-limited terminal, the fully flexible mode in-path verification header carries more information than the simplified mode in-path verification header. In this way, when generating the third packet, the resource-limited terminal may generate a relatively simple simplified mode in-path verification header instead of a relatively complex fully flexible mode in-path verification header.

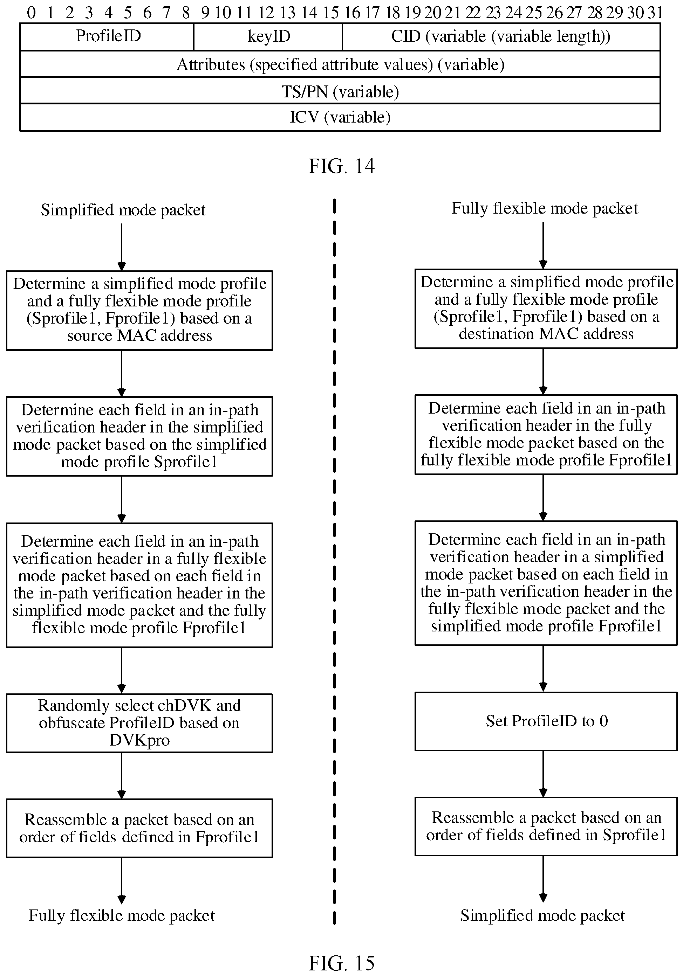

In some embodiments, FIG. 11 and Table 1 are diagrams of a format of a fully flexible mode in-path verification header according to an embodiment of this application. FIG. 14 is a diagram of a format of a simplified mode in-path verification header according to an embodiment of this application. As shown in FIG. 14, compared with the fully flexible mode in-path verification diagram shown in FIG. 11, the simplified mode in-path verification header may not carry fields such as a key derivation parameter (DVKRandom), a key truncation bit quantity (chDVK), TCI, CipherID, Window threshold index, and PS.

To facilitate subsequent translation from the simplified mode in-path verification header into the fully flexible mode in-path verification header by the translation point, specific values of some fields in missing fields in FIG. 14 may be described in a corresponding simplified mode profile. In this way, the translation point can translate the simplified mode in-path verification header into the fully flexible mode in-path verification header based on the simplified mode profile.

For example, if the simplified mode profile index is 0, the following content is defined in a profile searched based on the profile index 0.

(1) An order of fields in the in-path verification header is as follows:

$$ProfileID+KeyID+CID+Attributes+TS/PN+ICV+padding.$$

(2) A length of CID is 16 bits, a 32-bit timestamp is used for anti-replay, a length of ICV is 32 bits, a length of padding is 16 bits, an AES-128-CMAC algorithm is indicated, and a Window threshold index value is indicated.

(3) A field in a security protection scope is source/destination IP address+payload.

A value of TCI may be determined based on the 32-bit timestamp used for anti-replay, a value of CipherID may be determined based on the AES-128-CMAC algorithm, and a value of PS may be determined based on the field in the security protection scope.

Step 1302: The translation point reassembles the third in-path verification header into a fully flexible mode in-path verification header, and obfuscates a profile index carried in the fully flexible mode in-path verification header obtained through reassembly, to obtain a first packet including a first in-path verification header.

In some embodiments, the third in-path verification header carries a fourth profile index. In this scenario, an implementation in which the translation point reassembles the third in-path verification header into the fully flexible mode in-path verification header may be: obtaining a second profile index corresponding to the fourth profile index; and reassembling the third in-path verification header into the fully flexible mode in-path verification header based on a profile indicated by the second profile index and a profile indicated by the fourth profile index.

A fully flexible mode profile corresponding to a simplified mode profile is determined. Because a value of each field is defined in the profile, the translation point can translate the simplified mode in-path verification header into the fully flexible mode in-path verification header based on the simplified mode profile and the fully flexible mode profile.

For example, the third packet further includes an internet protocol IP header, the IP header carries a source medium access control MAC address, the translation point stores a profile mapping relationship, and the profile mapping relationship includes a plurality of MAC addresses and simplified mode profile indexes and fully flexible mode profile indexes that are respectively corresponding to the plurality of MAC addresses.

In this embodiment of this application, simplified mode profile indexes and fully flexible mode profile indexes that are respectively corresponding to different MAC addresses may be configured in advance on the translation point, so that the translation point quickly finds, when receiving a packet, a simplified mode profile index and a fully flexible mode profile index that are corresponding to a current MAC address. An authentication server may deliver, to the translation point in advance, the simplified mode profile index and the fully flexible mode profile index that are respectively corresponding to different MAC addresses.

In this scenario, an implementation of obtaining the second profile index corresponding to the fourth profile index may be: obtaining, from the profile mapping relationship, a fully flexible mode profile index corresponding to both the source MAC address and the fourth profile index, to obtain the second profile index.

In addition, an implementation of reassembling the third in-path verification header into the first in-path verification header based on the profile indicated by the second profile index and the profile indicated by the fourth profile index may be: generating an initial fully flexible mode in-path verification header based on the profile indicated by the second profile index, where fields except a profile index in the initial fully flexible mode in-path verification header may be temporarily filled with 0; then extracting a value of each field in the third in-path verification header based on the profile indicated by the fourth profile index; and filling the extracted field values into corresponding fields in the initial fully flexible mode in-path verification header. For fields in the fully flexible mode in-path verification header that are still 0, values of these fields may be obtained from the profile indicated by the fourth profile index, to generate a final fully flexible mode in-path verification header.

In addition, the translation point may further store a first derived key locally, and the first derived key may be delivered by the authentication server in advance. The authentication server generates the first derived key based on a master key identifier and a key derivation parameter by using a key derivation algorithm. In this case, an implementation in which the translation point obfuscates the profile index carried in the fully flexible mode in-path verification header obtained through reassembly may be: performing first obfuscation processing on the profile index carried in the fully flexible mode in-path verification header obtained through reassembly and the first derived key, where the first in-path verification header included in the first packet further carries the master key identifier and the key derivation parameter.

In the foregoing manner, the translation point can obfuscate a real profile index, and a related parameter is carried in an in-path manner, to reduce storage overheads of a verification point.

An implementation of performing the first obfuscation processing on a profile index carried in the first in-path verification header and the first derived key may be: obtaining a first key truncation bit quantity; obtaining a plurality of first bits through truncation from the first derived key based on the first key truncation bit quantity; and performing an exclusive OR operation on the plurality of first bits and the first profile index to obtain the second profile index, where the first in-path verification header included in the first packet further carries the first key truncation bit quantity.

For an implementation in which the translation point obtains the first key truncation bit quantity, refer to the implementation in which the terminal obtains the first key truncation bit quantity. Details are not described herein again. For other related content, refer to a process in which the terminal obfuscates the second profile index. Details are not described herein again.

**Step 1303:** The translation point sends the first packet to the verification point.

Correspondingly, the verification point receives the first packet from the terminal, where the first packet includes the unencrypted first in-path verification header, and the first in-path verification header carries the first profile index obtained through obfuscation.

**Step 1304:** The verification point determines the second profile index based on the first profile index, where the second profile index is a real index of a profile used in the first in-path verification header.

**Step 1305:** The verification point verifies the first packet based on the profile indicated by the second profile index.

**Step 1306:** After determining that the verification on the first packet succeeds, the verification point processes the first packet to obtain a second packet, where the second packet includes an updated first in-path verification header, and the updated first in-path verification header carries the second profile index.

**Step 1307:** The verification point sends the second packet to a server.

**Step 1308:** After receiving the second packet, the server returns a first response packet to the verification point, where the first response packet includes a second in-path verification header, and the second in-path verification header carries the second profile index.

**Step 1309:** The verification point encrypts the first response packet based on the profile indicated by the second profile index, and obfuscates the second profile index in the second in-path verification header as a third profile index, to obtain a second response packet, where the second response packet includes an updated second in-path verification header.

For specific implementations of step 1303 to step 1309, refer to step 902 to step 908 in the embodiment in FIG. 9. Details are not described herein again.

**Step 13010:** The translation point receives the second response packet sent by the verification point, where the second response packet includes a fourth in-path verification header, and the fourth in-path verification header is a fully flexible mode in-path verification header.

For example, a value of a reference bit of a profile index carried in the fourth in-path verification header is a second bit value, to indicate that the fourth in-path verification header is the fully flexible mode in-path verification header. For specific content, refer to the foregoing content. Details are not described herein again.

**Step 13011:** The translation point restores the profile index carried in the fourth in-path verification header, and reassembles the fourth in-path verification header into a fifth in-path verification header based on the restored profile index, to obtain a third response packet, where the fifth in-path verification header is a simplified mode in-path verification header.

For the translation point restoring the profile index carried in the fourth in-path verification header, refer to a process in which the terminal restores the profile index in the second response packet in the embodiment in FIG. 9. Details are not described herein again.

Because a current terminal is the resource-limited terminal, to reduce overheads of the terminal, the translation point may reassemble the fourth in-path verification header into the fifth in-path verification header based on the restored profile index, to translate the fully flexible mode in-path verification header into the simplified mode in-path verification header.

Assuming that the restored profile index is the second profile index, in some embodiments, an implementation in which the translation point reassembles the fourth in-path verification header into the fifth in-path verification header based on the restored profile index may be: obtaining the fourth profile index corresponding to the second profile index; and reassembling the fourth in-path verification header into the fifth in-path verification header based on the profile indicated by the second profile index and the profile indicated by the fourth profile index.

The simplified mode profile corresponding to the fully flexible mode profile is determined. Because a value of each field is defined in the profile, the translation point can translate the fully flexible mode in-path verification header into the simplified mode in-path verification header based on the simplified mode profile and the fully flexible mode profile.

For example, the second response packet further includes an internet protocol IP header, the IP header carries a source medium access control MAC address, the translation point stores a profile mapping relationship, and the profile mapping relationship includes a plurality of MAC addresses and simplified mode profile indexes and fully flexible mode profile indexes that are respectively corresponding to the plurality of MAC addresses.

In this scenario, an implementation of obtaining the fourth profile index corresponding to the second profile index may be: obtaining, from the profile mapping relationship, a simplified mode profile index corresponding to both the source MAC address and the second profile index, to obtain the fourth profile index.

In addition, an implementation of reassembling the fourth in-path verification header into the fifth in-path verification header based on the profile indicated by the second profile index and the profile indicated by the fourth profile index may be: extracting a value of each field in the fourth in-path verification header based on the profile indicated by the second profile index, generating an initial fifth in-path verification header based on the profile indicated by the fourth profile index, temporarily filling fields except a profile index in the initial fifth in-path verification header with 0, then extracting the value of each field from the fourth in-path verification header, and filling the extracted field values into corresponding fields in the initial fifth in-path verification header, to generate a final first in-path verification header.

**Step 13012:** The translation point sends the third response packet to the terminal.

Correspondingly, the terminal receives the third response packet from the translation point, where the third response packet carries the fifth in-path verification header, and the fifth in-path verification header is a simplified mode in-path verification header.

**Step 13013:** The terminal verifies the third response packet based on a profile indicated by a profile index carried in an in-path verification header in the third response packet.

The in-path verification header in the third response packet is the fifth in-path verification header. It can be learned from the foregoing content that the profile index carried in the fifth in-path verification header is a real index of a profile used in the fifth in-path verification header. Therefore, when receiving the third response packet, the terminal may directly search for a corresponding profile based on the profile index carried in the in-path verification header in the third response packet, and verify the third response packet based on the found profile.

For a specific implementation, refer to a process in which the terminal verifies the second response packet in the embodiment in FIG. 9. A difference lies in that the profile index does not need to be restored in this case.

Based on the embodiment shown in FIG. 13, the translation point may be deployed between the terminal and the verification point, and the translation point completes translation between the simplified mode in-path verification header and the fully flexible mode in-path verification header, that is, implements translation between a simplified mode packet and a fully flexible mode packet. In this way, overheads of the terminal can be reduced, so that the method provided in this embodiment of this application is more applicable to a scenario in which there are a large quantity of terminals.

FIG. 15 is a schematic flowchart of a translation point completing translation between a simplified mode in-path verification header and a fully flexible mode in-path verification header according to an embodiment of this application.

As shown in FIG. 15, when a simplified mode packet is translated into a fully flexible mode packet, the translation point determines a simplified mode profile and a fully flexible mode profile (marked as Sprofile1 and Fprofile1 respectively) based on a source MAC address carried in the packet, determines each field in an in-path verification header in the simplified mode packet based on the simplified mode profile Sprofile1, determines a value of each field in an in-path verification header in the fully flexible mode packet based on each field in the in-path verification header in the simplified mode packet and the fully flexible mode profile Fprofile1, then obfuscates a real profile index of the fully flexible mode in-path verification header, and generates the fully flexible mode in-path verification header based on an order of fields defined in the fully flexible mode profile Fprofile1, to obtain the fully flexible mode packet.

As shown in FIG. 15, when a fully flexible mode packet is translated into a simplified mode packet, the translation point determines a simplified mode profile and a fully flexible mode profile (marked as Sprofile1 and Fprofile1 respectively) based on a source MAC address carried in the packet, determines each field in an in-path verification header in the fully flexible mode packet based on the fully flexible mode profile Fprofile1, determines a value of each field in an in-path verification header in the simplified mode packet based on each field in the in-path verification header in the fully flexible mode packet and the simplified mode profile Sprofile1, then set a profile index of the simplified mode profile Sprofile1 to 0, and generates the simplified mode in-path verification header based on an order of fields defined in the simplified mode profile Sprofile1, to obtain the simplified mode packet.

A reason why the translation point sets the profile index of the simplified mode profile Sprofile1 to 0 is that only one simplified mode profile is stored in a terminal, and therefore the terminal does not need to search for a corresponding profile. Therefore, the translation point temporarily sets profile indexes of all simplified mode profiles Sprofile1 to 0, to reduce processing overheads of the translation point.

For a specific implementation of each step in FIG. 15, refer to the embodiment shown in FIG. 13. Details are not described herein again.

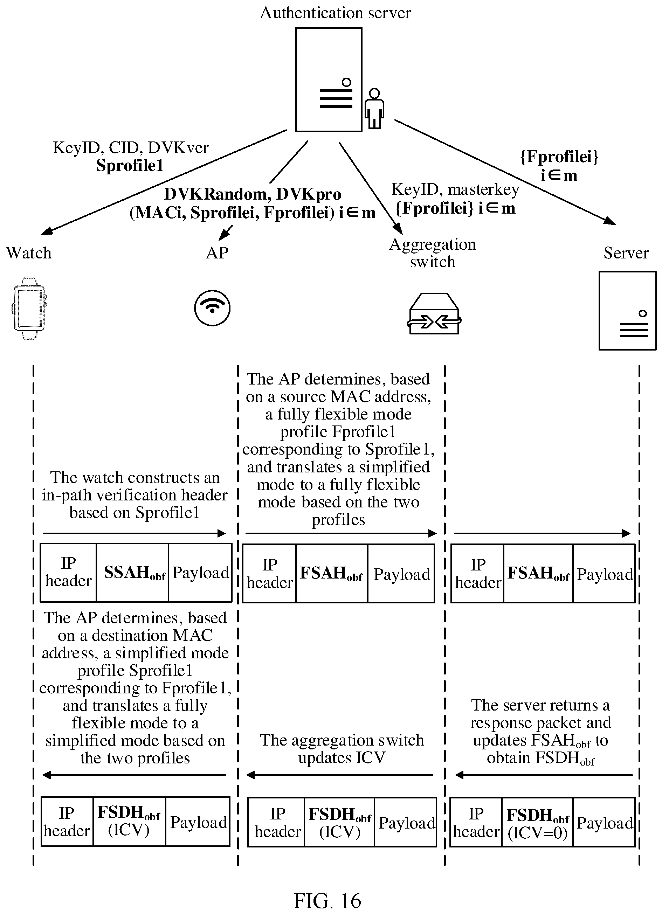

The following uses FIG. 16 as an example to describe the embodiment shown in FIG. 13. FIG. 16 is used as an example to describe the embodiment shown in FIG. 13, and does not constitute a limitation on the embodiment shown in FIG. 13.

As shown in FIG. 16, in addition to delivering KeyID, CID, and DVKver (a second derived key), the authentication server further delivers a simplified mode profile Sprofile1 to an IoT device like a watch (representing a resource-limited terminal). In addition, the authentication server delivers a key derivation parameter (DVKRandom) to an AP (as the translation point) to be carried in a packet, so that the verification point subsequently uses the key derivation parameter to derive a key DVKpro (a first derived key). The authentication server further delivers a profile mapping relationship (MACi, Sprofilei, Fprofilei) (i∈[m]) to the translation point. MACi indicates a MAC address of an ith IoT device, Sprofilei indicates a simplified mode profile corresponding to MACi, and Fprofilei indicates a fully flexible mode profile corresponding to MACi.

When the watch sends the packet to the AP, the AP queries a mapping relationship between a simplified mode profile and a fully flexible mode profile based on a MAC address of the watch, and then translates a simplified mode in-path verification header into a fully flexible mode in-path verification header. In this way, in the two scenarios in FIG. 9 and FIG. 13, the aggregation switch (as the verification point) needs to process only one type of verification logic, and processing overheads of the verification point are not increased additionally. In addition, because an attacker cannot learn definitions of the simplified mode profile and the fully flexible mode profile, profile implicit indication and profile selection confidentiality are implemented.

After the authentication server delivers parameters to each device, an interaction process between the watch, the server, and the verification point includes the following steps.

1. The watch sends a packet to the server.

The watch generates the packet. Detailed operations are as follows:

The watch determines the simplified mode profile and profileID.

The watch determines values of KeyID, CID, Attributes, and TS/PN fields based on the simplified mode profile.

Based on a protection scope specified in the simplified mode profile, the second derived key DVK ver is used to invoke an algorithm indicated by the simplified mode profile to perform encryption, to obtain ciphertext and ICV.

2. The AP receives the packet.

The AP determines the used profile Sprofile1 and the corresponding fully flexible mode profile Fprofile1 based on the source MAC address, and translates the simplified mode in-path verification header into the fully flexible mode in-path verification header based on the two profiles.

3. The aggregation switch and the server perform, after receiving the packet, processing operations same as those in the embodiment shown in FIG. 9.

4. The server returns a packet to the watch.

Processing manners of the server generating the packet and the aggregation switch receiving the packet are the same as those in the embodiment shown in FIG. 9.

5. The AP receives the packet.

The AP determines the used simplified mode profile Sprofile1 and the corresponding fully flexible mode profile Fprofile1 based on a destination MAC address, and translates the fully flexible mode in-path verification header into the simplified mode in-path verification header based on the two profiles.

6. The watch receives the packet.

(1) Obtain each field in the in-path verification header based on the used simplified mode profile.

(2) Check ICV based on the second derived key DVKver.

FIG. 9 and FIG. 13 are used as examples to describe the two application scenarios of embodiments of this application. Optionally, in this embodiment of this application, the in-path verification method shown in FIG. 9 may be performed for all terminals. Optionally, the in-path verification method shown in FIG. 13 may be performed for all terminals. Optionally, the in-path verification methods shown in FIG. 9 and FIG. 13 may be respectively performed for different types of terminals. This is not limited in embodiments of this application.

The following describes structures of devices provided in embodiments of this application.

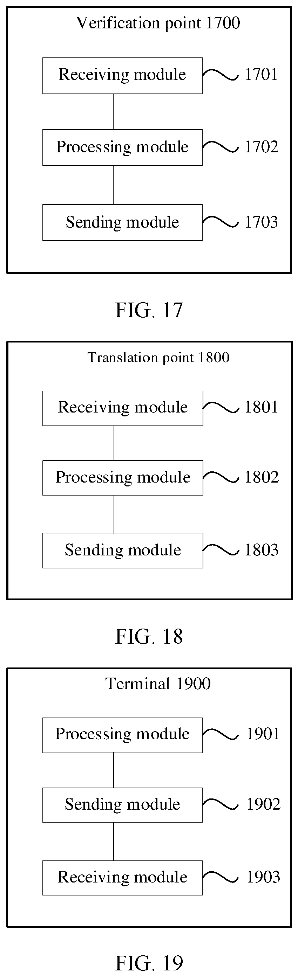

FIG. 17 is a diagram of a structure of a verification point according to an embodiment of this application. As shown in FIG. 17, the verification point 1700 includes the following modules.

A receiving module 1701 is configured to receive a first packet from a terminal, where the first packet includes an unencrypted first in-path verification header, and the first in-path verification header carries a first profile index. For a specific implementation, refer to step 901 and step 902 in the embodiment in FIG. 9.

A processing module 1702 is configured to determine a second profile index based on the first profile index, where the second profile index is a real index of a profile used in the first in-path verification header. For a specific implementation, refer to step 903 in the embodiment in FIG. 9.

The processing module 1702 is further configured to verify the first packet based on a profile indicated by the second profile index. For a specific implementation, refer to step 904 in the embodiment in FIG. 9.

Optionally, the first in-path verification header further carries a master key identifier and a key derivation parameter.

The processing module 1702 is configured to:

determine a first derived key based on the master key identifier and the key derivation parameter; and
perform first obfuscation processing on the first derived key and the first profile index to obtain the second profile index.

Optionally, the first in-path verification header further carries a first key truncation bit quantity.

The processing module 1702 is configured to:

obtain a plurality of first bits through truncation from the first derived key based on the first key truncation bit quantity; and
perform an exclusive OR operation on the plurality of first bits and the first profile index to obtain the second profile index.

Optionally, the verification point stores a plurality of profiles and profile indexes that are in one-to-one correspondence with the plurality of profiles. Each profile in the plurality of profiles is used to at least define a position of each field in a corresponding in-path verification header, and at least one same field in different profiles has different positions.

The processing module 1702 is configured to:

obtain, from the plurality of profiles, the profile indicated by the second profile index;
obtain a value of at least one field in the first in-path verification header based on the profile indicated by the second profile index; and
verify the first packet based on the value of the at least one field in the first in-path verification header.

Optionally, the processing module 1702 is further configured to: after determining that the verification on the first packet succeeds, process, by the verification point, the first packet to obtain a second packet, where the second packet includes an updated first in-path verification header, and the updated first in-path verification header carries the second profile index.

The verification point further includes a sending module 1703, configured to send the second packet to a server.

Optionally, the receiving module 1701 is further configured to receive a first response packet from the server, where the first response packet includes a second in-path verification header, and the second in-path verification header carries the second profile index.

The processing module 1702 is further configured to encrypt the first response packet based on the profile indicated by the second profile index, and obfuscate the second profile index in the second in-path verification header as a third profile index, to obtain a second response packet, where the second response packet includes an updated second in-path verification header.

The sending module 1703 is further configured to send the second response packet to the terminal.

Optionally, the second in-path verification header further carries the master key identifier and the key derivation parameter that are in the first in-path verification header. The processing module 1702 is configured to:

determine the first derived key based on the master key identifier and the key derivation parameter; and
perform second obfuscation processing on the first derived key and the second profile index to obtain a third profile index.

Optionally, the processing module 1702 is configured to:

obtain a second key truncation bit quantity;
obtain a plurality of second bits through truncation from the first derived key based on the second key truncation bit quantity; and
perform an exclusive OR operation on the plurality of second bits and the second profile index to obtain the third profile index.

The updated second in-path verification header further carries the second key truncation bit quantity.

In this embodiment of this application, when sending a packet, the terminal may not separately encrypt an in-path verification header, but perform obfuscation processing on a profile index carried in the in-path verification header, so that a profile index transmitted in a network is an obfuscated profile index. In this way, even if an attacker obtains the obfuscated profile index, a relative position of each field in the in-path verification header cannot be obtained based on the obfuscated profile index. Therefore, network security of the packet can be improved. In addition, in this manner, there is no need to separately encrypt the in-path verification header. Therefore, packet transmission pressure of the network can also be reduced.

It should be noted that, when the verification point provided in the foregoing embodiment performs in-path verification, division of the foregoing functional modules is taken as an example for illustration. During actual application, the foregoing functions may be allocated to different functional modules as required for implementation. In other words, an internal structure of the device is divided into different functional modules to complete all or some of the functions described above. In addition, the verification point provided in the foregoing embodiment belongs to a same concept as the embodiment of the in-path verification method shown in FIG. 9. For a specific implementation process of the verification point, refer to the method embodiment. Details are not described herein again.

FIG. 18 is a diagram of a structure of a translation point according to an embodiment of this application. As shown in FIG. 18, the translation point 1800 includes the following modules.

A receiving module 1801 is configured to receive a third packet from a terminal, where the third packet includes a third in-path verification header, and the third in-path verification header is a simplified mode in-path verification header. For a specific implementation, refer to step 1301 in the embodiment in FIG. 13.

A processing module 1802 is configured to reassemble the third in-path verification header into a fully flexible mode in-path verification header, and obfuscate a profile index carried in the fully flexible mode in-path verification header obtained through reassembly, to obtain a first packet including a first in-path verification header, where the fully flexible mode in-path verification header carries more information than the simplified mode in-path verification header. For a specific implementation, refer to step 1302 in the embodiment in FIG. 13.

A sending module 1803 is configured to send the first packet to a verification point. For a specific implementation, refer to step 1303 in the embodiment in FIG. 13.

Optionally, the third in-path verification header carries a fourth profile index. The processing module 1802 is configured to:

obtain a second profile index corresponding to the fourth profile index; and
reassemble the third in-path verification header into the fully flexible mode in-path verification header based on a profile indicated by the second profile index and a profile indicated by the fourth profile index.

Optionally, the third packet further includes an internet protocol IP header, the IP header carries a source medium access control MAC address, the translation point stores a profile mapping relationship, and the profile mapping relationship includes a plurality of MAC addresses and simplified mode profile indexes and fully flexible mode profile indexes that are respectively corresponding to the plurality of MAC addresses.

The processing module 1802 is configured to obtain, from the profile mapping relationship, a fully flexible mode profile index corresponding to both a source MAC address and the fourth profile index, to obtain the second profile index.

Optionally, the translation point stores a first derived key, a master key identifier, and a key derivation parameter, and the first derived key is generated based on the master key identifier and the key derivation parameter.

The processing module 1802 is configured to perform first obfuscation processing on the profile index carried in the fully flexible mode in-path verification header obtained through reassembly and the first derived key.

The first in-path verification header further carries the master key identifier and the key derivation parameter.

Optionally, a value of a reference bit of a profile index carried in the third in-path verification header is a first bit value, to indicate that the third in-path verification header is the simplified mode in-path verification header.

Optionally, the receiving module 1801 is further configured to receive a second response packet sent by the verification point, where the second response packet includes a fourth in-path verification header, and the fourth in-path verification header is a fully flexible mode in-path verification header.

The processing module 1802 is further configured to restore a profile index carried in the fourth in-path verification header, and reassemble the fourth in-path verification header into a fifth in-path verification header based on the restored profile index, to obtain a third response packet, where the fifth in-path verification header is a simplified mode in-path verification header.

The sending module 1803 is further configured to send the third response packet to the terminal.

Optionally, a value of a reference bit of the profile index carried in the fourth in-path verification header is a second bit value, to indicate that the fourth in-path verification header is the fully flexible mode in-path verification header.

In this embodiment of this application, the translation point may be deployed between the terminal and the verification point, and the translation point completes translation between the simplified mode in-path verification header and the fully flexible mode in-path verification header, that is, implements translation between a simplified mode packet and a fully flexible mode packet. In this way, overheads of the terminal can be reduced, so that the method provided in this embodiment of this application is more applicable to a scenario in which there are a large quantity of terminals.

It should be noted that, when the translation point provided in the foregoing embodiment performs in-path verification, division of the foregoing functional modules is taken as an example for illustration. During actual application, the foregoing functions may be allocated to different functional modules as required for implementation. In other words, an internal structure of the device is divided into different functional modules to complete all or some of the functions described above. In addition, the translation point provided in the foregoing embodiment belongs to a same concept as the embodiment of the in-path verification method shown in FIG. 13. For a specific implementation process of the translation point, refer to the method embodiment. Details are not described herein again.

FIG. 19 is a diagram of a structure of a terminal according to an embodiment of this application. As shown in FIG. 19, the terminal 1900 includes the following modules: a processing module 1901, a sending module 1902, and a receiving module 1903.

In some scenarios, the modules in the terminal 1900 are configured to implement the following functions.

The processing module 1901 is configured to generate, by the terminal, an in-path verification header based on a profile indicated by a second profile index, and obfuscate the second profile index in the generated in-path verification header as a first profile index, to obtain a first in-path verification header. For a specific implementation, refer to step 901 in the embodiment in FIG. 9.

The sending module 1902 is configured to send a first packet to a verification point, where the first packet includes the unencrypted first in-path verification header, and the first in-path verification header carries the first profile index. For a specific implementation, refer to step 902 in the embodiment in FIG. 9.

Optionally, the terminal stores a first derived key, a master key identifier, and a key derivation parameter, and the first derived key is generated based on the master key identifier and the key derivation parameter.

The processing module 1901 is configured to:
perform first obfuscation processing on the first derived key and the second profile index to obtain the first profile index.

The first in-path verification header further carries the master key identifier and the key derivation parameter.

Optionally, the processing module 1901 is configured to:

obtain a first key truncation bit quantity;
obtain a plurality of first bits through truncation from the first derived key based on the first key truncation bit quantity; and
perform an exclusive OR operation on the plurality of first bits and the first profile index to obtain the second profile index.

The first in-path verification header further carries the first key truncation bit quantity.

Optionally, the receiving module 1903 is configured to receive a second response packet sent by the verification point, where the second response packet includes an unencrypted fourth in-path verification header, and the fourth in-path verification header carries a third profile index.

The processing module 1901 is further configured to determine the second profile index based on the third profile index, where the second profile index is a real index of a profile used in the fourth in-path verification header.

The processing module 1901 is further configured to verify the second response packet based on a profile indicated by the second profile index.

Optionally, the terminal stores the first derived key.

The processing module 1901 is configured to:
perform second obfuscation processing on the first derived key and the third profile index to obtain the second profile index.

Optionally, a second in-path verification header further carries a second key truncation bit quantity.

The processing module 1901 is configured to:

obtain a plurality of second bits through truncation from the first derived key based on the second key truncation bit quantity; and
perform an exclusive OR operation on the plurality of second bits and the third profile index to obtain the second profile index.

In this embodiment of this application, when sending a packet, the terminal may not separately encrypt an in-path verification header, but perform obfuscation processing on a profile index carried in the in-path verification header, so that a profile index transmitted in a network is an obfuscated profile index. In this way, even if an attacker obtains the obfuscated profile index, a relative position of each field in the in-path verification header cannot be obtained based on the obfuscated profile index. Therefore, network security of the packet can be improved. In addition, in this manner, there is no need to separately encrypt the in-path verification header. Therefore, packet transmission pressure of the network can also be reduced.

It should be noted that, when the terminal provided in the foregoing embodiment performs in-path verification, division of the foregoing functional modules is taken as an example for illustration. During actual application, the foregoing functions may be allocated to different functional modules as required for implementation. In other words, an internal structure of the device is divided into different functional modules to complete all or some of the functions described above. In addition, the terminal provided in the foregoing embodiment belongs to a same concept as the embodiment of the in-path verification method shown in FIG. 9. For a specific implementation process of the terminal, refer to the method embodiment. Details are not described herein again.

In some other scenarios, the modules in the terminal 1900 are configured to implement the following functions.

The sending module 1902 is configured to send a third packet to a translation point, where the third packet includes a third in-path verification header, and the third in-path verification header is a simplified mode in-path verification header.

A profile index carried in the third in-path verification header is a real index of a profile used in the third in-path verification header.

Optionally, the receiving module 1903 is configured to receive a third response packet sent by the translation point, where the third response packet includes a fifth in-path verification header, and the fifth in-path verification header is a simplified mode in-path verification header.

In this embodiment of this application, the translation point may be deployed between the terminal and the verification point, and the translation point completes translation between the simplified mode in-path verification header and the fully flexible mode in-path verification header, that is, implements translation between a simplified mode packet and a fully flexible mode packet. In this way, overheads of the terminal can be reduced, so that the method provided in this embodiment of this application is more applicable to a scenario in which there are a large quantity of terminals.

It should be noted that, when the terminal provided in the foregoing embodiment performs in-path verification, division of the foregoing functional modules is taken as an example for illustration. During actual application, the foregoing functions may be allocated to different functional modules as required for implementation. In other words, an internal structure of the device is divided into different functional modules to complete all or some of the functions described above. In addition, the terminal provided in the foregoing embodiment belongs to a same concept as the embodiment of the in-path verification method shown in FIG. 13. For a specific implementation process of the terminal, refer to the method embodiment. Details are not described herein again.

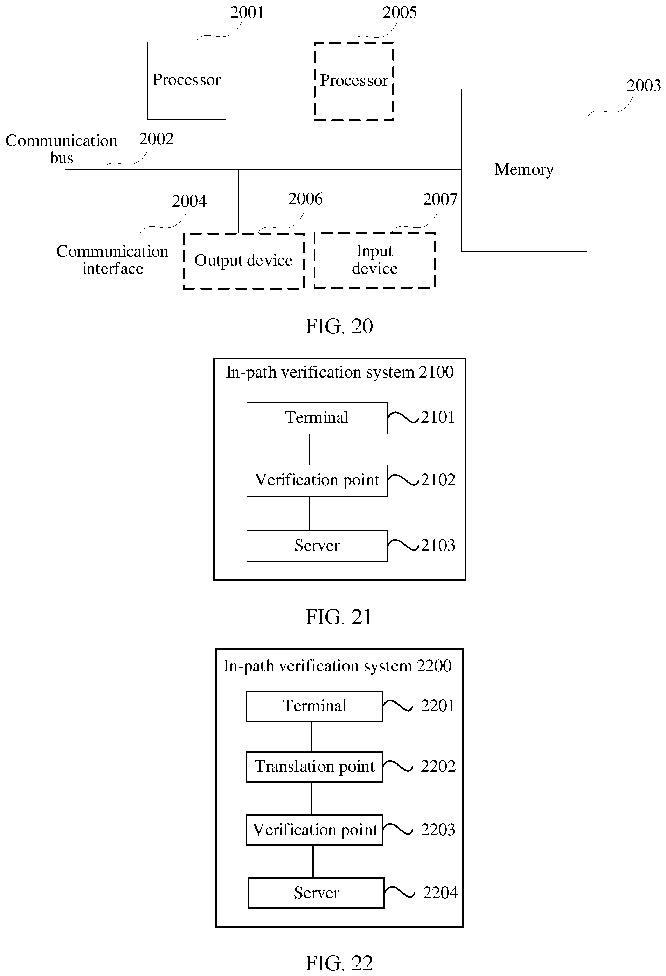

FIG. 20 is a diagram of a structure of a computer device according to an embodiment of this application. Any device in the foregoing embodiments, such as a terminal, a translation point, a verification point, or an authentication server, may be implemented by using the computer device shown in FIG. 20. Refer to FIG. 20. The computer device includes a processor 2001, a communication bus 2002, a memory 2003, and at least one communication interface 2004.

The processor 2001 may be a general-purpose central processing unit (central processing unit, CPU), an application-specific integrated circuit (application-specific integrated circuit, ASIC), or one or more integrated circuits configured to control program execution of solutions of this application.

The communication bus 2002 is configured to transfer information between the foregoing components.

The memory 2003 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only Memory, CD-ROM) or another compact disc storage, an optical disc storage (including a compact disc, a laser disc, an optical disc, a digital versatile disc, a Blu-ray disc, or the like), a magnetic disk or another magnetic storage device, or any other medium that can be configured to carry or store expected program code in a form of an instruction or a data structure and that can be accessed by a computer, but is not limited thereto. The memory 2003 may exist independently, and is connected to the processor 2001 through the communication bus 2002. Alternatively, the memory 2003 and the processor 2001 may be integrated together.

The memory 2003 is configured to store program code for executing the solutions of this application, and the processor 2001 controls the execution. The processor 2001 is configured to execute the program code stored in the memory 2003. The program code may include one or more software modules. Any device in the foregoing embodiments may determine, by using the processor 2001 and the one or more software modules in the program code in the memory 2003, data used for application development.

The communication interface 2004 uses any apparatus such as a transceiver, and is configured to communicate with another device or a communication network. The communication network may be an Ethernet, a radio access network (radio access network, RAN), a wireless local area network (wireless local area network, WLAN), or the like.

During specific implementation, in an embodiment, the computer device may include a plurality of processors, for example, the processor 2001 and a processor 2005 that are shown in FIG. 20. Each of the processors may be a single-core (single-CPU) processor, or may be a multicore (multi-CPU) processor. The processor herein may be one or more devices, circuits, and/or processing cores configured to process data (for example, computer program instructions).

During specific implementation, in an embodiment, the computer device may further include an output device 2006 and an input device 2007. The output device 2006 communicates with the processor 2001, and may display information in a plurality of manners. For example, the output device 2006 may be a liquid crystal display (liquid crystal display, LCD), a light emitting diode (light emitting diode, LED) display device, a cathode ray tube (cathode ray tube, CRT) display device, or a projector (projector). The input device 2007 communicates with the processor 2001 and may receive an input from a user in a plurality of manners. For example, the input device 2007 may be a mouse, a keyboard, a touchscreen device, or a sensor device.

The computer device may be a general-purpose computer device or a dedicated computer device. During specific implementation, the computer device may be a desktop computer, a portable computer, a network server, a personal digital assistant (personal digital assistant, PDA), a mobile phone, a tablet, a wireless terminal device, a communication device, or an embedded device. A type of the computer device is not limited in this embodiment of this application.

FIG. 21 is a diagram of a structure of an in-path verification system 2100 according to an embodiment of this application. As shown in FIG. 21, the in-path verification system 2100 includes a terminal 2101, a verification point 2102, and a server 2103.

For functions of the terminal 2101 and the verification point 2102, refer to the embodiment shown in FIG. 9. Details are not described herein again.

FIG. 22 is a diagram of a structure of another in-path verification system 2200 according to an embodiment of this application. As shown in FIG. 22, the in-path verification system 2200 includes a terminal 2201, a translation point 2202, a verification point 2203, and a server 2204.

For functions of the terminal 2201, the translation point 2202, and the verification point 2203, refer to the embodiment shown in FIG. 13. Details are not described herein again.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedures or functions based on embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a tape), an optical medium (for example, a digital versatile disc (digital versatile disc, DVD)), or a semi-conductive medium (for example, a solid-state disk (solid-state disk, SSD)).

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are embodiments provided in this application, but are not intended to limit embodiments of this application. Any modification, equivalent replacement, or improvement made without departing from the spirit and principle of embodiments of this application shall fall within the protection scope of embodiments of this application.

**Claims**

1. An in-path verification method, wherein the method comprises:

   receiving, by a verification point, a first packet from a terminal, wherein the first packet comprises an unencrypted first in-path verification header, and the first in-path verification header carries a first profile index;
   determining, by the verification point, a second profile index based on the first profile index, wherein the second profile index is a real index of a profile used in the first in-path verification header; and
   verifying, by the verification point, the first packet based on a profile indicated by the second profile index.

2. The method according to claim 1, wherein the first in-path verification header further carries a master key identifier and a key derivation parameter; and
   determining, by the verification point, the second profile index based on the first profile index comprises:

   determining a first derived key based on the master key identifier and the key derivation parameter; and
   performing first obfuscation processing on the first derived key and the first profile index to obtain the second profile index.

3. The method according to claim 2, wherein the first in-path verification header further carries a first key truncation bit quantity; and
   performing the first obfuscation processing on the first derived key and the first profile index to obtain the second profile index comprises:

   obtaining a plurality of first bits through truncation from the first derived key based on the first key truncation bit quantity; and
   performing an exclusive OR operation on the plurality of first bits and the first profile index to obtain the second profile index.

4. The method according to any one of claims 1 to 3, wherein the verification point stores a plurality of profiles and profile indexes that are in one-to-one correspondence with the plurality of profiles, each profile in the plurality of profiles is used to at least define a position of each field in a corresponding in-path verification header, and at least one same field in different profiles has different positions; and
   verifying, by the verification point, the first packet based on the profile indicated by the second profile index comprises:

   obtaining, from the plurality of profiles, the profile indicated by the second profile index;
   obtaining a value of at least one field in the first in-path verification header based on the profile indicated by the second profile index; and

verifying the first packet based on the value of the at least one field in the first in-path verification header.

5. The method according to any one of claims 1 to 4, wherein after verifying, by the verification point, the first packet based on the profile indicated by the second profile index, the method further comprises:

after determining that the verification on the first packet succeeds, processing, by the verification point, the first packet to obtain a second packet, wherein the second packet comprises an updated first in-path verification header, and the updated first in-path verification header carries the second profile index; and
sending, by the verification point, the second packet to a server.

6. The method according to claim 5, wherein the method further comprises:

receiving, by the verification point, a first response packet from the server, wherein the first response packet comprises a second in-path verification header, and the second in-path verification header carries the second profile index;
encrypting, by the verification point, the first response packet based on the profile indicated by the second profile index, and obfuscating the second profile index in the second in-path verification header as a third profile index, to obtain a second response packet, wherein the second response packet comprises an updated second in-path verification header; and
sending, by the verification point, the second response packet to the terminal.

7. The method according to claim 6, wherein the second in-path verification header further carries the master key identifier and the key derivation parameter that are in the first in-path verification header; and
obfuscating, by the verification point, the second profile index in the second in-path verification header as the third profile index comprises:

determining the first derived key based on the master key identifier and the key derivation parameter; and
performing second obfuscation processing on the first derived key and the second profile index to obtain the third profile index.

8. The method according to claim 7, wherein performing the second obfuscation processing on the first derived key and the second profile index to obtain the third profile index comprises:

obtaining a second key truncation bit quantity;
obtaining a plurality of second bits through truncation from the first derived key based on the second key truncation bit quantity; and
performing an exclusive OR operation on the plurality of second bits and the second profile index to obtain the third profile index, wherein
the updated second in-path verification header further carries the second key truncation bit quantity.

9. An in-path verification method, wherein the method comprises:

receiving, by a translation point, a third packet from a terminal, wherein the third packet comprises a third in-path verification header, and the third in-path verification header is a simplified mode in-path verification header;
reassembling, by the translation point, the third in-path verification header into a fully flexible mode in-path verification header, and obfuscating a profile index carried in the fully flexible mode in-path verification header obtained through reassembly, to obtain a first packet comprising a first in-path verification header, wherein the fully flexible mode in-path verification header carries more information than the simplified mode in-path verification header; and
sending, by the translation point, the first packet to a verification point.

10. The method according to claim 9, wherein the third in-path verification header carries a fourth profile index; and
reassembling, by the translation point, the third in-path verification header into the fully flexible mode in-path verification header comprises:

obtaining a second profile index corresponding to the fourth profile index; and
reassembling the third in-path verification header into the fully flexible mode in-path verification header based on a profile indicated by the second profile index and a profile indicated by the fourth profile index.

11. The method according to claim 10, wherein the third packet further comprises an internet protocol IP header, the IP header carries a source medium access control MAC address, the translation point stores a profile mapping relationship, and the profile mapping relationship comprises a plurality of MAC addresses and simplified mode profile indexes and fully flexible mode profile indexes that are respectively corresponding to the plurality of MAC addresses; and

obtaining the second profile index corresponding to the fourth profile index comprises:

obtaining, from the profile mapping relationship, a fully flexible mode profile index corresponding to both the source MAC address and the fourth profile index, to obtain the second profile index.

12. The method according to any one of claims 9 to 11, wherein the translation point stores a first derived key, a master key identifier, and a key derivation parameter, and the first derived key is generated based on the master key identifier and the key derivation parameter; and

obfuscating the profile index carried in the fully flexible mode in-path verification header obtained through reassembly comprises:

performing first obfuscation processing on the profile index carried in the fully flexible mode in-path verification header obtained through reassembly and the first derived key, wherein

the first in-path verification header further carries the master key identifier and the key derivation parameter.

13. The method according to any one of claims 9 to 12, wherein a value of a reference bit of a profile index carried in the third in-path verification header is a first bit value, to indicate that the third in-path verification header is the simplified mode in-path verification header.

14. The method according to any one of claims 9 to 13, wherein the method further comprises:

receiving, by the translation point, a second response packet sent by the verification point, wherein the second response packet comprises a fourth in-path verification header, and the fourth in-path verification header is a fully flexible mode in-path verification header;

restoring, by the verification point, a profile index carried in the fourth in-path verification header, and reassembling the fourth in-path verification header into a fifth in-path verification header based on a restored profile index, to obtain a third response packet, wherein the fifth in-path verification header is a simplified mode in-path verification header; and

sending, by the translation point, the third response packet to the terminal.

15. The method according to claim 14, wherein a value of a reference bit of the profile index carried in the fourth in-path verification header is a second bit value, to indicate that the fourth in-path verification header is the fully flexible mode in-path verification header.

16. An in-path verification method, wherein the method comprises:

generating, by a terminal, an in-path verification header based on a profile indicated by a second profile index, and obfuscating the second profile index in the generated in-path verification header as a first profile index, to obtain a first in-path verification header; and

sending, by the terminal, a first packet to a verification point, wherein the first packet comprises the unencrypted first in-path verification header, and the first in-path verification header carries the first profile index.

17. The method according to claim 16, wherein the terminal stores a first derived key, a master key identifier, and a key derivation parameter, and the first derived key is generated based on the master key identifier and the key derivation parameter; and

obfuscating the second profile index in the generated in-path verification header as the first profile index comprises:

performing first obfuscation processing on the first derived key and the second profile index to obtain the first profile index, wherein

the first in-path verification header further carries the master key identifier and the key derivation parameter.

18. The method according to claim 17, wherein performing the first obfuscation processing on the first derived key and the second profile index to obtain the first profile index comprises:

obtaining a first key truncation bit quantity;

obtaining a plurality of first bits through truncation from the first derived key based on the first key truncation bit quantity; and

performing an exclusive OR operation on the plurality of first bits and the first profile index to obtain the second profile index, wherein

the first in-path verification header further carries the first key truncation bit quantity.

19. The method according to any one of claims 16 to 18, wherein after sending, by the terminal, the first packet to the verification point, the method further comprises:

receiving, by the terminal, a second response packet sent by the verification point, wherein the second response packet comprises an unencrypted fourth in-path verification header, and the fourth in-path verification header carries a third profile index;

determining, by the terminal, the second profile index based on the third profile index, wherein the second profile index is a real index of a profile used in the fourth in-path verification header; and

verifying, by the terminal, the second response packet based on the profile indicated by the second profile index.

20. The method according to claim 19, wherein the terminal stores the first derived key; and determining, by the terminal, the second profile index based on the third profile index comprises:

performing second obfuscation processing on the first derived key and the third profile index to obtain the second profile index.

21. The method according to claim 20, wherein the second in-path verification header further carries a second key truncation bit quantity; and

performing the second obfuscation processing on the first derived key and the third profile index comprises:

obtaining a plurality of second bits through truncation from the first derived key based on the second key truncation bit quantity; and

performing an exclusive OR operation on the plurality of second bits and the third profile index to obtain the second profile index.

22. An in-path verification method, wherein the method comprises:

sending, by a terminal, a third packet to a translation point, wherein the third packet comprises a third in-path verification header, and the third in-path verification header is a simplified mode in-path verification header.

23. The method according to claim 22, wherein the method further comprises:

receiving, by the terminal, a third response packet sent by the translation point, wherein the third response packet comprises a fifth in-path verification header, and the fifth in-path verification header is a simplified mode in-path verification header.

24. A verification point, wherein the verification point comprises:

a receiving module, configured to receive a first packet from a terminal, wherein the first packet comprises an unencrypted first in-path verification header, and the first in-path verification header carries a first profile index; and

a processing module, configured to determine a second profile index based on the first profile index, wherein the second profile index is a real index of a profile used in the first in-path verification header, and

the processing module is further configured to verify the first packet based on a profile indicated by the second profile index.

25. A translation point, wherein the translation point comprises:

a receiving module, configured to receive a third packet from a terminal, wherein the third packet comprises a third in-path verification header, and the third in-path verification header is a simplified mode in-path verification header;

a reassembling module, configured to reassemble the third in-path verification header into a fully flexible mode in-path verification header, and obfuscate a profile index carried in the fully flexible mode in-path verification header obtained through reassembly, to obtain a first packet comprising a first in-path verification header, wherein the fully flexible mode in-path verification header carries more information than the simplified mode in-path verification header; and
a sending module, configured to send the first packet to a verification point.

26. A terminal, wherein the terminal comprises:

an obfuscating module, configured to generate an in-path verification header based on a profile indicated by a second profile index, and obfuscate the second profile index in the generated in-path verification header as a first profile index, to obtain a first in-path verification header; and
a sending module, configured to send a first packet to a verification point, wherein the first packet comprises the unencrypted first in-path verification header, and the first in-path verification header carries the first profile index.

27. A terminal, wherein the terminal comprises:
a sending module, configured to send a third packet to a translation point, wherein the third packet comprises a third in-path verification header, and the third in-path verification header is a simplified mode in-path verification header.

28. A verification point, wherein the verification point comprises a memory and a processor, wherein

the memory is configured to store a program that supports the apparatus in performing the method according to any one of claims 1 to 8, and store data for implementing the method according to any one of claims 1 to 8; and
the processor is configured to execute the program stored in the memory.

29. A translation point, wherein the translation point comprises a memory and a processor, wherein

the memory is configured to store a program that supports the apparatus in performing the method according to any one of claims 9 to 15, and store data for implementing the method according to any one of claims 9 to 15; and
the processor is configured to execute the program stored in the memory.

30. A terminal, wherein the terminal comprises a memory and a processor, wherein

the memory is configured to store a program that supports the apparatus in performing the method according to any one of claims 16 to 21, and store data for implementing the method according to any one of claims 16 to 21; and
the processor is configured to execute the program stored in the memory.

31. A terminal, wherein the terminal comprises a memory and a processor, wherein

the memory is configured to store a program that supports the apparatus in performing the method according to claim 22 or 23, and store data for implementing the method according to claim 22 or 23; and
the processor is configured to execute the program stored in the memory.

32. A computer-readable storage medium, wherein the computer-readable storage medium stores instructions, and when the instructions are run on a computer, the computer is enabled to perform the method according to any one of claims 1 to 8, perform the method according to any one of claims 9 to 15, perform the method according to any one of claims 16 to 21, or perform the method according to claim 22 or 23.

33. An in-path verification system, wherein the system comprises a terminal and a verification point, wherein

the terminal is configured to implement the method according to any one of claims 16 to 21; and
the verification point is configured to implement the method according to any one of claims 1 to 8.

34. An in-path verification system, wherein the system comprises a terminal, a translation point, and a verification point, wherein

the terminal is configured to implement the method according to claim 22 or 23;
the translation point is configured to implement the method according to any one of claims 9 to 15; and
the verification point is configured to implement the method according to any one of claims 1 to 8.

Terminal        Network        Terminal

Transmission
mode

| IP header | **AH header** | Payload | | |
|---|---|---|---|---|

| IP header | **ESP header** | Payload | **ESP trailer** | **ESP ICV** |
|---|---|---|---|---|

FIG. 1

Terminal        Network        Terminal

Tunnel
mode

| External IP header | **AH header** | IP header | Payload | | |
|---|---|---|---|---|---|

| External IP header | **ESP header** | IP header | Payload | **ESP trailer** | **ESP ICV** |
|---|---|---|---|---|---|

FIG. 2

An authentication server
distributes a key

DVK=KDF (CID, masterkey)

CID, KeyID, DVK

| Terminal (mobile phone, host) |
|---|

KeyID, masterkey (master key)

| Verification point (aggregation switch) |
|---|

## FIG. 3

Host

Access switch

Aggregation switch

Server

Source authenticity check

| IP header (CID+ICV) | Payload |
|---|---|

| IP header (CID+ICV) | Payload |
|---|---|

| IP header (CID+ICV) | Payload |
|---|---|

Reassemble a packet and insert an in-path verification header

Return traffic authenticity check

| IP header (CID+ICV) | Payload |
|---|---|

| IP header (CID+ICV) | Payload |
|---|---|

| IP header | Payload |
|---|---|

## FIG. 4

**Determine a format of an in-path verification packet
(Determine a field length, semantics, and an order)**

Attacker

| Profile used |
| Communicator |
| identity |
| Data packet |
| size |
| Security |
| protection |
| scope |
| Quantity of |
| delivered |
| packets |
| · |
| · |
| · |

In-path
verification
header

| IP header |
| ProfileID |
| AuthFlag |
| TS/PN |
| KeyID |
| CID |
| ICV |
| Payload |

Encryption

An additional
header is needed
to carry security
identifier
information or
security context
for explanation

| IP header |
| ProfileID |
| AuthFlag |
| TS/PN |
| KeyID |
| CID |
| ICV |
| Payload |

Attacker

The attacker
can still obtain
a field type
corresponding
to ciphertext
data

FIG. 5

Authentication
server 104

Terminal 101 ◄► Translation
point 105 ◄► Verification
point 102 ◄► Server 103

FIG. 6

Authentication server

Deliver parameters such
as a profile and a key

Host          Access switch     Aggregation switch          Server

Watch                  AP

## FIG. 7

A verification point receives a first packet from a terminal, where
the first packet includes an unencrypted first in-path verification
header, and the first in-path verification header carries a first
profile index

801

The verification point determines a second profile index based on
the first profile index, where the second profile index is a real
index of a profile used in the first in-path verification header

802

The verification point verifies the first packet based on a profile
indicated by the second profile index

803

## FIG. 8

| Terminal | Verification point | Server |
|---|---|---|

901: Generate an in-path verification header based on a profile indicated by a second profile index, and obfuscate the second profile index in the generated in-path verification header as a first profile index, to obtain a first in-path verification header

902: Send a first packet to the verification point, where the first packet includes the unencrypted first in-path verification header

903: Determine the second profile index based on the first profile index, where the second profile index is a real index of a profile used in the first in-path verification header

904: Verify the first packet based on the profile indicated by the second profile index

905: After determining that the verification on the first packet succeeds, process the first packet to obtain a second packet, where the second packet includes an updated first in-path verification header, and the updated first in-path verification header carries the second profile index

906: Send the second packet to the server

907: After receiving the second packet, return a first response packet to the verification point, where the first response packet includes a second in-path verification header, and the second in-path verification header carries the second profile index

908: Encrypt the first response packet based on the profile indicated by the second profile index, and obfuscate the second profile index in the second in-path verification header as a third profile index, to obtain a second response packet, where the second response packet includes an updated second in-path verification header

909: Send the second response packet to the terminal

9010: Determine a second profile index based on the third profile index, where the second profile index is a real index of a profile used in the second in-path verification header

9011: Verify the second response packet based on a profile indicated by the second profile index

FIG. 9

chDVK=3, truncation starts from a 3rd bit of DVKpro, and it is assumed that a truncation result is: 0101101
Last seven bits of ProfileID are: 0000001

⇩

Last seven bits of obfuscated ProfileID are: 0101100=0101101⊕0000001

## FIG. 10

0  1  2  3  4  5  6  7  8  9 10 11 12 13  14 15 16 17 18 19 20 21 22 23 24 25 26 27 28 29 30 31

| ProfileID | chDVK | keyID | DVKRandom | TCI |
|-----------|-------|-------|-----------|-----|
| CipherID | Window threshold index (window threshold index) | | | |
| CID (variable (variable length)) | | | | |
| TS/PN (variable) | | | | |
| Protected Scope/Security protection coverage field scope (variable) | | | | |
| ICV (variable) | | | | |

## FIG. 11

Authentication server

KeyID, CID, DVKver
**DVKRandom, DVKpro, Fprofile1**

KeyID, masterkey
**{Fprofilei} i ∈ m**

**{Fprofilei} i ∈ m**

Host

Access
switch

Aggregation
switch

Server

| The host obfuscates ProfileID based on DVKpro, and obfuscates an in-path verification header based on the profile Fprofile1 to obtain SAH | The access switch performs forwarding | The aggregation switch derives DVKpro based on masterkey and DVKRandom, determines a used profile based on DVKpro, and finally performs in-path verification |
|---|---|---|

| IP header | **SAH** | Payload | | IP header | **SAH** | Payload | | IP header | **SAH** | Payload |
|---|---|---|---|---|---|---|---|---|---|---|

| The access switch performs forwarding | The aggregation switch updates ICV | The server returns a response packet, and updates SAH |
|---|---|---|

| IP header | **SAH** | Payload | | IP header | **SAH** | Payload | | IP header | **SAH** (ICV=0) | Payload |
|---|---|---|---|---|---|---|---|---|---|---|

FIG. 12

| Terminal | Translation point | Verification point | Server |
|----------|-------------------|--------------------|--------|

1301: The terminal sends a third packet to the translation point, where the third packet includes a third in-path verification header, and the third in-path verification header is a simplified mode in-path verification header

1302: The translation point reassembles the third in-path verification header into a fully flexible mode in-path verification header, and obfuscates a profile index carried in the fully flexible mode in-path verification header obtained through reassembly, to obtain a first packet including a first in-path verification header

1303: The translation point sends the first packet to the verification point

1304: The verification point determines a second profile index based on a first profile index, where the second profile index is a real index of a profile used in the first in-path verification header

1305: The verification point verifies the first packet based on a profile indicated by the second profile index

1306: After determining that the verification on the first packet succeeds, process the first packet to obtain a second packet, where the second packet includes an updated first in-path verification header, and the updated first in-path verification header carries the second profile index

1307: Send the second packet to the server

1308: Return a first response packet to the verification point, where the first response packet includes a second in-path verification header, and the second in-path verification header carries the second profile index

1309: Encrypt the first response packet based on the profile indicated by the second profile index, and obfuscate the second profile index in the second in-path verification header as a third profile index, to obtain a second response packet

13010: The translation point receives the second response packet sent by the verification point, where the second response packet includes a fourth in-path verification header, and the fourth in-path verification header is a fully flexible mode in-path verification header

13011: The translation point restores a profile index carried in the fourth in-path verification header, and reassembles the fourth in-path verification header into a fifth in-path verification header based on the restored profile index, to obtain a third response packet, where the fifth in-path verification header is a simplified mode in-path verification header

13012: Send the third response packet to the terminal

13013: The terminal verifies the third response packet based on a profile indicated by a profile index carried in an in-path verification header in the third response packet

FIG. 13

| 0 1 2 3 4 5 6 7 8 9 10 11 12 13 14 15 | 16 17 18 19 20 21 22 23 24 25 26 27 28 29 30 31 | |
|---|---|---|
| ProfileID | keyID | CID (variable (variable length)) |
| Attributes (specified attribute values) (variable) | | |
| TS/PN (variable) | | |
| ICV (variable) | | |

FIG. 14

**Simplified mode packet**

↓

Determine a simplified mode profile and a fully flexible mode profile (Sprofile1, Fprofile1) based on a source MAC address

↓

Determine each field in an in-path verification header in the simplified mode packet based on the simplified mode profile Sprofile1

↓

Determine each field in an in-path verification header in a fully flexible mode packet based on each field in the in-path verification header in the simplified mode packet and the fully flexible mode profile Fprofile1

↓

Randomly select chDVK and obfuscate ProfileID based on DVKpro

↓

Reassemble a packet based on an order of fields defined in Fprofile1

↓

**Fully flexible mode packet**

---

**Fully flexible mode packet**

↓

Determine a simplified mode profile and a fully flexible mode profile (Sprofile1, Fprofile1) based on a destination MAC address

↓

Determine each field in an in-path verification header in the fully flexible mode packet based on the fully flexible mode profile Fprofile1

↓

Determine each field in an in-path verification header in a simplified mode packet based on each field in the in-path verification header in the fully flexible mode packet and the simplified mode profile Fprofile1

↓

Set ProfileID to 0

↓

Reassemble a packet based on an order of fields defined in Sprofile1

↓

**Simplified mode packet**

FIG. 15

FIG. 16

Verification point 1700

Receiving module ∿ 1701

Processing module ∿ 1702

Sending module ∿ 1703

FIG. 17

Translation point 1800

Receiving module ∿ 1801

Processing module ∿ 1802

Sending module ∿ 1803

FIG. 18

Terminal 1900

Processing module ∿ 1901

Sending module ∿ 1902

Receiving module ∿ 1903

FIG. 19

FIG. 20

FIG. 21

FIG. 22

## INTERNATIONAL SEARCH REPORT

| International application No. |
| --- |
| **PCT/CN2023/136161** |

### A. CLASSIFICATION OF SUBJECT MATTER

H04L 9/40(2022.01)i;  H04L 43/08(2022.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; EPTXT; WOTXT; IEEE: 报文, 随路, 随流, 头, 验证, 认证, 鉴权, 加密, 密钥, 模板, 索引, 混淆, packet, in-situ flow, header, verification, authentication, encryption, key, template, index, confound, obscure

### C. DOCUMENTS CONSIDERED TO BE RELEVANT

| Category* | Citation of document, with indication, where appropriate, of the relevant passages | Relevant to claim No. |
| --- | --- | --- |
| X | CN 113541924 A (HUAWEI TECHNOLOGIES CO., LTD.) 22 October 2021 (2021-10-22) description, paragraphs [0005]-[0037] and [0208]-[0314] | 22-23, 27, 31-32 |
| A | WO 2021105965 A1 (AUGNET LTD.) 03 June 2021 (2021-06-03) claim 1 | 1-34 |
| A | CN 113938403 A (HUAWEI TECHNOLOGIES CO., LTD.) 14 January 2022 (2022-01-14) entire document | 1-34 |
| A | CN 113179240 A (NEW POS TECHNOLOGY LIMITED) 27 July 2021 (2021-07-27) entire document | 1-34 |
| A | CN 114615354 A (ALIPAY (HANGZHOU) INFORMATION TECHNOLOGY CO., LTD.) 10 June 2022 (2022-06-10) entire document | 1-34 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **23 February 2024** | **26 February 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/136161**

| Patent document cited in search report | | | Publication date (day/month/year) | Patent family member(s) | | | Publication date (day/month/year) |
|---|---|---|---|---|---|---|---|
| CN | 113541924 | A | 22 October 2021 | WO | 2021208664 | A1 | 21 October 2021 |
| | | | | EP | 4117242 | A1 | 11 January 2023 |
| | | | | US | 2023115034 | A1 | 13 April 2023 |
| | | | | EP | 4117242 | A4 | 09 August 2023 |
| | | | | CN | 113541924 | B | 29 September 2023 |
| WO | 2021105965 | A1 | 03 June 2021 | GB | 201917362 | D0 | 15 January 2020 |
| | | | | GB | 2589569 | A | 09 June 2021 |
| | | | | GB | 2589569 | B | 13 April 2022 |
| | | | | US | 2023362630 | A1 | 09 November 2023 |
| | | | | EP | 4085669 | A1 | 09 November 2022 |
| CN | 113938403 | A | 14 January 2022 | WO | 2022012489 | A1 | 20 January 2022 |
| | | | | EP | 4175240 | A1 | 03 May 2023 |
| | | | | US | 2023145245 | A1 | 11 May 2023 |
| CN | 113179240 | A | 27 July 2021 | CN | 113179240 | B | 06 January 2023 |
| CN | 114615354 | A | 10 June 2022 | WO | 2023197925 | A1 | 19 October 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211575192X